# EUROPEAN PATENT APPLICATION

(11) **EP 3 998 169 A1**
(43) Date of publication of application: **18.05.2022**
(21) Application number: 20837503.0
(22) Date of filing: 08.07.2020
(51) Int. Cl.: B44C 1/165, B44C 1/17, B32B 37/02, B32B 7/12, B32B 33/00

(54) **DECORATIVE ARTICLE MANUFACTURING METHOD, DECORATIVE SHEET, AND DECORATIVE ARTICLE**

(30) Priority: 09.07.2019 JP 2019127984; 14.08.2019 JP 2019148921
(71) Applicant: Dai Nippon Printing Co., Ltd., Shinjuku-ku, Tokyo 162-8001 (JP)
(72) Inventor: YODA Shinya, Tokyo 162-8001 (JP); KOBAYASHI Yoshimasa, Tokyo 162-8001 (JP); MATSUI Hiroto, Tokyo 162-8001 (JP)
(74) Representative: Müller-Boré & Partner Patentanwälte PartG mbB
(86) International application number: PCT/JP2020/026702
(87) International publication number: WO 2021/006295

(57) **Abstract**

To provide a method for manufacturing a decorated product that enables to easily manufacture a highly designable decorated product; a decorating sheet that can be used in this method for manufacturing a decorating sheet; and a highly designable decorated product. A decorated product 400 is manufactured by bonding an adhesive layer 200 to an image layer 10 side of a decorating sheet 100 provided with an image layer 10 having a thermal transfer image 20 on a supporter 1, and thereafter integrating the decorating sheet 100 with an object to be decorated 300 on an adhesive layer 200 side of the decorating sheet 100 to which the adhesive layer 200 is bonded.

## Description

### Technical Field

The present disclosure relates to a method for manufacturing a decorated product, a decorating sheet, and a decorated product.

### Background Art

Conventionally, decorated products formed of an arbitrary article (object to be decorated) which is decorated with a decorating sheet on the surface thereof have been used for various purposes. As a method for manufacturing such a decorated product, in-mold molding and insert molding (for example, Patent Literature 1) using a decorating sheet, and the like are known. Patent Literature 2 proposes a decorating sheet for use in in-mold molding, in which the decorating sheet has a resin sheet and an image layer, and the image layer is formed of an ink-cured image of an inkjet ink composition. According to this decorating sheet, it is said that a decorated product with improved image quality can be manufactured.

### Citation List

### Patent Literature

Patent Literature 1: Japanese Patent Laid-Open No. 11-91041
Patent Literature 2: Japanese Patent Laid-Open No. 2013-43935

### Summary of Invention

### Technical Problem

Methods for manufacturing a decorated product, which have been proposed so far, are complicated in the manufacturing step. In addition, when a die is used for manufacturing a decorated product, the manufacturing cost will increase. There is a need for a manufacturing method that enables to easily manufacture a decorated product. There is also room for improvement in designability of a decorated product to be manufactured.

In addition, in a method for manufacturing a decorated product using a decorating sheet, which has been proposed so far, it is necessary to use a dedicated decorating sheet according to the function required of the decorated product to be manufactured.

Main objects of the present disclosure are: providing a method for manufacturing a decorated product that enables to easily manufacture a highly designable decorated product; providing a decorating sheet that can be used in this manufacturing method; providing a highly designable decorated product; providing a method for manufacturing a decorated product that enables to easily manufacture a decorated product having various functions; and providing a decorated product having various functions.

### Solution to Problem

A method for manufacturing a decorated product according to an embodiment of the present disclosure includes: a bonding step of bonding an adhesive layer to an image layer side of a decorating sheet, in which an image layer having a thermal transfer image is provided on a supporter; and an integration step of integrating an object to be decorated and a decorating sheet together on an adhesive layer side of the decorating sheet to which the adhesive layer is bonded.

A method for manufacturing a decorated product according to an embodiment of the present disclosure includes: a bonding step of bonding an adhesive layer to an object to be decorated; and an integration step of integrating an object to be decorated and a decorating sheet, in which an image layer having a thermal transfer image is provided on a supporter, together on an adhesive layer side of the object to be decorated to which the adhesive layer is bonded.

A decorating sheet according to an embodiment of the present disclosure includes a supporter, an image layer in which a thermal transfer image is formed, and an adhesive layer, which are laminated in this order.

A decorated product according to an embodiment of the present disclosure includes a supporter, an image layer in which a thermal transfer image is formed, an adhesive layer, and an object to be decorated, which are laminated in this order.

A decorated product according to an embodiment of the present disclosure includes the above-described decorating sheet and the object to be decorated, which are integrated together.

A method for manufacturing a decorated product according to an embodiment of the present disclosure includes: a decorating sheet manufacturing step of manufacturing a decorating sheet having an image layer by forming an image in an image forming layer of a decorating sheet precursor provided with the image forming layer on a supporter; an integration step of integrating an object to be decorated and the decorating sheet together after the decorating sheet manufacturing step; and a functional layer forming step of forming a functional layer on the decorating sheet after the integration step.

A method for manufacturing a decorated product according to an embodiment of the present disclosure includes: a decorating sheet manufacturing step of manufacturing a decorating sheet having an image layer by forming an image in an image forming layer of a decorating sheet precursor provided with the image forming layer on a supporter; a functional layer forming step of forming a functional layer on the decorating sheet after the decorating sheet manufacturing step; and an integration step of integrating an object to be decorated and the decorating sheet together after the functional layer forming step.

### Advantageous Effects of Invention

The method for manufacturing a decorated product and the decorating sheet according to an embodiment of the present disclosure enable to easily manufacture a highly designable decorated product. The decorated product of the present disclosure is highly designable.

Further, the method for manufacturing a decorated product according to an embodiment of the present disclosure enables to easily manufacture a decorated product having various functions. The decorated product of the present disclosure has various functions.

### Brief Description of Drawings

[FIG. 1] FIG. 1 is a set of process views to show an example of a step in a method for manufacturing a decorated product of the present disclosure.
[FIG. 2] FIG. 2 is a set of process views to show an example of a step in the method for manufacturing a decorated product of the present disclosure.
[FIG. 3] FIG. 3 is a set of explanatory diagrams to show an example bonding step.
[FIG. 4] FIG. 4 is a set of explanatory diagrams to show the example bonding step.
[FIG. 5] FIG. 5 is a set of process views to show an example of a step in the method for manufacturing a decorated product of the present disclosure.
[FIG. 6] FIG. 6 is a set of process views to show an example of a step in the method for manufacturing a decorated product of the present disclosure.
[FIG. 7] FIGS. 7A and 7B are each an explanatory diagram to show an example of a method for forming a thermal transfer image, and FIG. 7C is a schematic sectional view to show an example of a thermal transfer sheet that can be used for forming a thermal transfer image.
[FIG. 8] FIG. 8 shows schematic sectional views to illustrate an example decorating sheet to be used in the method for manufacturing a decorated product of the present disclosure, and an example decorating sheet of the present disclosure.
[FIG. 9] FIG. 9 shows schematic sectional views to illustrate an example decorating sheet to be used in the method for manufacturing a decorated product of the present disclosure, and an example decorating sheet of the present disclosure.
[FIG. 10] FIG. 10 is a set of process views to show an example of a step in the method for manufacturing a decorated product of the present disclosure.
[FIG. 11] FIG. 11 is a set of process views to show an example of a step in the method for manufacturing a decorated product of the present disclosure.
[FIG. 12] FIG. 12 is a set of process views to show an example of a step in the method for manufacturing a decorated product of the present disclosure.
[FIG. 13] FIG. 13 shows schematic sectional views to illustrate an example of a functional layer to be used in the method for manufacturing a decorated product of the present disclosure.
[FIG. 14] FIG. 14 is a set of explanatory diagrams to show an example of a functional layer forming step.
[FIG. 15] FIG. 15 is a set of explanatory diagrams to show an example of the functional layer forming step.
[FIG. 16] FIG. 16 is a set of process views to show an example of a step in the method for manufacturing a decorated product of the present disclosure.
[FIG. 17] FIG. 17 is a set of process views to show an example of a step in the method for manufacturing a decorated product of the present disclosure.
[FIG. 18] FIG. 18 is a set of process views to show an example of a step in the method for manufacturing a decorated product of the present disclosure.
[FIG. 19] FIG. 19 is a set of process views to show an example of a step in the method for manufacturing a decorated product of the present disclosure.
[FIG. 20] FIG. 20 shows schematic sectional views to illustrate an example of a transfer sheet.
[FIG. 21] FIG. 21 shows schematic sectional views to illustrate an example of a decorating sheet of the present disclosure.

### Description of Embodiments

Hereinafter, embodiments of the present invention will be described with reference to drawings and others. It should be noted that the present invention can be implemented in many different embodiments and is not construed as being limited to the description of the embodiments exemplified below. Further, in order to clarify the explanation, the drawings may schematically represent the width, thickness, shape, etc., of each part as compared with the actual aspect, but this is just an example, and will not limit the interpretation of the present invention. Further, in the specification of the present application and each of the drawings, those elements previously described with respect to drawings already referred may be designated by the same reference symbols, and detailed description thereof may be omitted as appropriate. Further, for convenience of explanation, the terms "upper" and "lower" will be used for explanation, but the vertical direction may be reversed. The same applies to the left-right direction.

### <<Method for manufacturing decorated product according to first embodiment>>

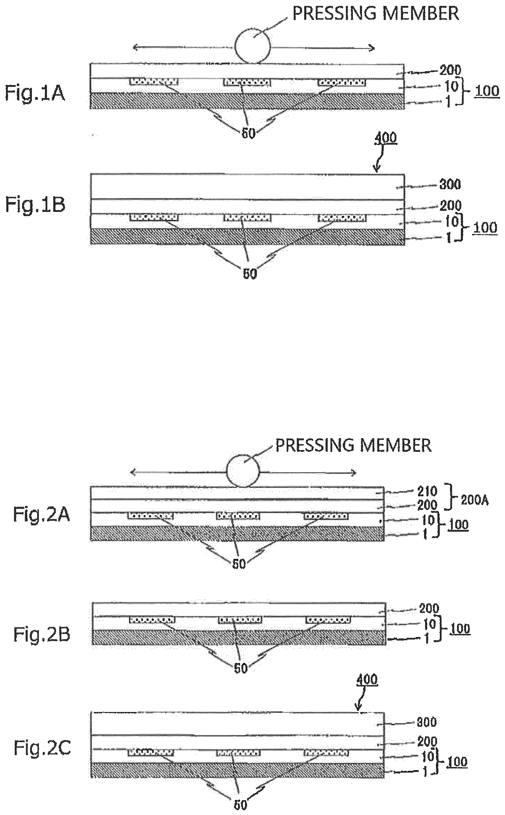

A method for manufacturing a decorated product according to a first embodiment of the present disclosure includes a bonding step and an integration step. FIGS. 1A and 1B, and FIGS. 2A, 2B, and 2C are process views each showing an example of the method for manufacturing a decorated product according to the first embodiment of the present disclosure.

The bonding step is a step of bonding an adhesive layer 200 to an image layer 10 side of a decorating sheet 100 in which an image layer 10 is provided on a supporter 1 (see FIGS. 1A and 2A). The image layer 10 of the decorating sheet 100 has a thermal transfer image 50.

The integration step is a step of integrating the decorating sheet 100 and an object to be decorated 300 together on an adhesive layer 200 side of the decorating sheet 100, after the bonding step (see FIGS. 1B and 2C).

The method for manufacturing a decorated product according to the first embodiment of the present disclosure uses the decorating sheet 100 having the image layer 10 in which a thermal transfer image is formed. The method for manufacturing a decorated product according to the first embodiment of the present disclosure can manufacture a highly designable decorated product 400. A decorated product manufactured is one in which the object to be decorated 300 is decorated with the decorating sheet 100. In the method for manufacturing a decorated product according to the first embodiment of the present disclosure, the adhesive layer 200 is bonded to the decorating sheet 100 which is to be integrated with the object to be decorated 300. In the method for manufacturing a decorated product according to the first embodiment of the present disclosure, the decorated product 400 can be simply manufactured only by placing the decorating sheet 100 and the object to be decorated 300 to overlap each other. Hereinafter, each step will be described with reference to an example.

### <Bonding step>

The bonding step is a step of bonding the adhesive layer 200 to the image layer 10 side of the decorating sheet 100. In an example bonding step, the adhesive layer 200 is placed to overlap the image layer 10 side of the decorating sheet 100 (see FIG. 1A). Next, the adhesive layer 200 is bonded to the decorating sheet 100 by pressing the decorating sheet 100 side or the adhesive layer 200 side.

In a mode shown in FIG. 1A, the adhesive layer 200 side is pressed by a pressing member. The pressing member may press the decorating sheet 100 or the adhesive layer 200. An example pressing member is a pressure roll. The decorating sheet 100 or the adhesive layer 200 may be pressed by hand. While the adhesive layer 200 side is pressed in the mode shown in FIG. 1A, the decorating sheet 100 side may be pressed.

### (Adhesive layer)

The adhesive layer 200 contains an adhesive component. Examples of the adhesive component include acrylic resin, vinyl chloride-vinyl acetate copolymer, vinyl acetate resin, polyester, epoxy resin, polyimide, and synthetic rubber. The adhesive component contained in the adhesive layer 200 may be of one type or of two or more types. The adhesive layer 200 may be an adhesive film or an adhesive sheet. The thickness of the adhesive layer 200 is preferably 1 µm or more and 1000 µm or less.

The adhesive layer 200 has adhesiveness on the surfaces which come into contact with the decorating sheet 100 and the object to be decorated 300. The adhesive layer 200 may have a single-layer structure or a laminated structure in which layers having adhesiveness are laminated. An example adhesive layer is a laminated structure in which a layer having adhesiveness is provided on each surface of a member having no adhesiveness. An example adhesive layer is a laminated structure in which a layer having adhesiveness is provided on each surface of a film or the like.

As example adhesive layer 200 is a masking member-attached adhesive layer 200A which includes the adhesive layer 200 and a masking member 210 provided on one surface of the adhesive layer (see FIG. 2A). In a mode shown in FIG. 2A, the decorating sheet 100 is in contact with the other surface of the masking member-attached adhesive layer 200A. The masking member-attached adhesive layer 200A may be configured such that the masking member 210 is provided on each surface of the adhesive layer 200. When the masking member-attached adhesive layer 200A in which the masking member 210 is provided on each surface of the adhesive layer 200 is used, the masking member 210 provided on the other surface of the masking member-attached adhesive layer 200A is peeled off before the bonding step. Next, the decorating sheet 100 and the masking member-attached adhesive layer 200A may be bonded together with the masking member 210 left on one surface of the masking member-attached adhesive layer 200A (see FIG. 2A). The masking member 210 remaining on one surface of the masking member-attached adhesive layer 200A may be peeled off before the integration step.

The masking member 210 has a function of masking the adhesiveness of the adhesive layer 200. The masking member 210 may have a lower adhesiveness than the adhesive layer 200. The masking member 210 may be peeled off from the adhesive layer 200. Examples of the masking member 210 include a release film, a separate paper, a separate film, a peeling film, and a peeling paper. The masking member 210 may be a resin layer. An example masking member 210 contains a component having releasability. Examples of the component having releasability include silicone resin, fluororesin, aminoalkyd resin, melamine resin, acrylic resin, polyester, and wax.

In the mode shown in FIG. 2A, the masking member 210 is located on one surface of the adhesive layer 200. This mode can suppress the adhesion between the adhesive layer 200 and the pressing member. In this mode, the pressing property by the pressing member and the mobility of the pressing member are excellent. This mode can suppress the bonding between the adhesive layer 200 and the supporter 1 of the decorating sheet 100 when the decorating sheet 100 bonded with the adhesive layer 200 is wound up to be stored.

FIG. 2B shows a state in which the masking member 210 is peeled off from the decorating sheet 100 to which the masking member-attached adhesive layer 200A is bonded. The method for manufacturing a decorated product according to the first embodiment of the present disclosure allows to obtain the decorated product 400, in which the decorating sheet 100 and the object to be decorated 300 are integrated together, only by placing the object to be decorated 300 to overlap the adhesive layer 200 side of the decorating sheet 100, which is bonded with the adhesive layer 200 (see FIGS. 1B and 2C) .

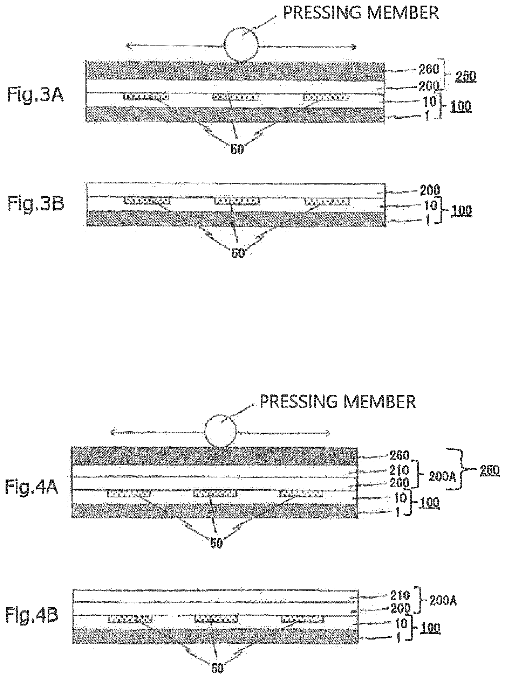

FIGS. 3A and 3B, and FIGS. 4A and 4B show different modes of the bonding step, in which the adhesive layer 200 of the adhesive layer transfer sheet 250 is transferred to bond the adhesive layer 200 to the decorating sheet 100 (see FIGS. 3B and 4B). In the mode shown in FIG. 3A, an adhesive layer transfer sheet 250, in which the adhesive layer 200 is provided on a supporter 260, is used. The adhesive layer 200 of the adhesive layer transfer sheet 250 can be peeled off from the supporter 260. The adhesive layer transfer sheet 250 of this mode allows the decorating sheet 100 and the adhesive layer transfer sheet 250 to overlap each other. Next, the adhesive layer 200 can be transferred to the decorating sheet side by pressing the adhesive layer transfer sheet 250 side or the decorating sheet 100 side. By this transfer, the adhesive layer 200 can be bonded to the decorating sheet 100. Various layers may be provided between the supporter 260 of the adhesive layer transfer sheet 250 and the adhesive layer 200. The various layers can be exemplified by a release layer and the like. The release layer is a layer that remains on the supporter 260 side when the adhesive layer 200 is moved to the decorating sheet 100 side.

In an example adhesive layer transfer sheet 250, the adhesive force between the adhesive layer 200 and the constituent member on the supporter 260 side is smaller than the adhesive force between the adhesive layer 200 and the decorating sheet 100. The transfer of the adhesive layer 200 using the adhesive layer transfer sheet 250 may be performed while applying thermal energy to a heating device such as a thermal head, and a pressing member such as a hot stamp, a heat roll, etc. The transfer of the adhesive layer 200 using the adhesive layer transfer sheet 250 may be performed without applying thermal energy to the pressing member such as a cold roll.

In a mode shown in FIG. 4A, the adhesive layer transfer sheet 250 in which the masking member 210 and the adhesive layer 200 are provided in this order on the supporter 260 is used. The adhesive layer transfer sheet 250 in which the masking member-attached adhesive layer 200A is provided on the supporter 260 may be used. The adhesive layer transfer sheet 250 of this mode allows the adhesive layer 200 and the masking member 210 to be peeled off from the supporter 260 side.

### <Integration step>

The integration step is a step of integrating the decorating sheet 100 to which the adhesive layer 200 is bonded and the object to be decorated 300 together. By undergoing this step, the decorated product 400 in which the decorating sheet 100 and the object to be decorated 300 are integrated together is obtained.

In the integration step, the decorating sheet 100 to which the adhesive layer 200 is bonded is used. In the integration step, the decorating sheet 100 and the object to be decorated 300 can be integrated together by simply placing the object to be decorated 300 to overlap the adhesive layer 200 side of the decorating sheet. If necessary, the decorating sheet 100 bonded to the adhesive layer 200 and the object to be decorated 300 may be placed to overlap each other, and then the decorating sheet 100 side or the object to be decorated 300 side may be pressed.

There are no restrictions on the shape of the object to be decorated 300, the size of the object to be decorated 300, the material of the object to be decorated 300, and the like. Examples of the object to be decorated 300 include plain paper, quality paper, tracing paper, wood, polycarbonate, acrylic resin, acrylonitrile/butadiene/styrene (ABS) resin, resin plates (or films) of polyvinyl chloride, etc., and metal plates of aluminum, etc., glass plates, and ceramic plates of pottery, etc. The object to be decorated 300 may be configured such that a plurality of members are laminated. The object to be decorated 300 may have a predetermined image. The object to be decorated 300 may be configured such that a portion or the whole thereof has a curvature, a concavo-convex structure, or the like.

An example object to be decorated 300 has transparency. In the object to be decorated 300 of this mode, the thermal transfer image included in the image layer 10 of the decorating sheet 100 can be visually recognized when the manufactured decorated product 400 is viewed from the object to be decorated 300 side. The object to be decorated 300 may have a portion having transparent. Transparency includes colorless transparency, translucency, and colored transparency. In one mode of the manufactured decorated product 400, all the members located on the side of the object to be decorated 300 with respect to the image layer 10 have transparency. The decorated product 400 manufactured by the manufacturing method according to the first embodiment of the present disclosure may be configured such that the thermal transfer image 50 included in the image layer 10 can be visually recognized from either one of, or both of the decorating sheet 100 side of the decorated product 400, and the object to be decorated 300 side. In one mode of the manufactured decorated product 400, the thermal transfer image 50 can be visually recognized from the decorating sheet 100 side. The object to be decorated 300 in the decorated product 400 of this mode may or may not have transparency.

### <Durable layer forming step>

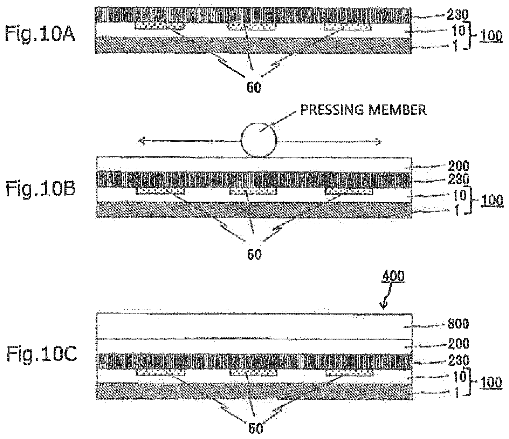

The method for manufacturing a decorated product according to the first embodiment of the present disclosure may include a durable layer forming step. The durable layer forming step is a step of forming a durable layer 230 on the image layer 10 of the decorating sheet 100 before the bonding step (see FIG. 10A). FIGS. 10A, 10B, and 10C are process views showing an example of the method for manufacturing a decorated product according to the first embodiment of the present disclosure.

In the decorated product 400 manufactured by the method for manufacturing a decorated product according to the first embodiment of the present disclosure, which includes the durable layer forming step, the durable layer 230 is located between the image layer 10 and the adhesive layer 200. The method for manufacturing a decorated product, which includes the durable layer forming step, can suppress, by means of the durable layer 230, the migration of components contained in the thermal transfer image 50 to the adhesive layer 200 side. As a result, it is possible to suppress the occurrence of oozing in the thermal transfer image 50 and the like.

The durable layer forming step is particularly suitable when the thermal transfer image 50 included in the image layer 10 is a thermal transfer image formed by a sublimation-type thermal transfer method. The durable layer forming step is not limited to a mode shown in FIGS. 10A, 10B, and 10C. The durable layer forming step can be applied to the method for manufacturing a decorated product of a mode shown in each figure and of various embodiments described in the description of the present application. When the method for manufacturing a decorated product according to the first embodiment of the present disclosure includes a decorating sheet manufacturing step described later, the durable layer forming step may be performed after the decorating sheet manufacturing step.

The durable layer 230 located between the image layer 10 and the adhesive layer 200 has a function of suppressing oozing of the thermal transfer image 50 included in the image layer 10 as compared with a case where the image layer 10 and the adhesive layer 200 are in direct contact with each other. The durable layer 230 may have a single-layer structure or a laminated structure. The component of the durable layer 230 may be determined in consideration of the component of the image layer 10, the component of the thermal transfer image 50, and the like. An example durable layer 230 contains acrylic resin, polyester, polyurethane, a vinyl chloride-vinyl acetate copolymer, cellulose resin, polyvinylpyrrolidone, polyvinyl alcohol, and the like. The component contained in the durable layer 230 may be of one kind or of two or more kinds.

The durable layer 230 in a preferred mode has a single-layer structure or a laminated structure, and includes a layer X that satisfies the following relational formula (1). The durable layer 230 in this mode can suppress oozing of the thermal transfer image 50 and can increase thermal durability of the durable layer 230. The durable layer 230 having high thermal durability can suppress unintended melting of the durable layer 230 and unintended softening of the durable layer 230 in each step of manufacturing the decorated product 400. The durable layer 230 in this mode can reduce damage to the thermal transfer image 50 of the image layer 10 in each step of manufacturing the decorated product 400. The durable layer 230 of this mode can suppress unintended separation between the image layer 10 and the durable layer 230, unintended separation between the adhesive layer 200 and the durable layer 230, and the like in each step of manufacturing the decorated product 400.

An example durable layer 230 has a laminated structure, and at least one layer is the layer X. When the durable layer 230 has a laminated structure, it is preferable that the layer located closest to the adhesive layer 200 is the layer X. An example durable layer 230 has a laminated structure, and every layer constituting the durable layer 230 is the layer X.

Glass transition temperature (Tg) of the main component of the adhesive layer < Glass transition temperature (Tg) of the main component of the layer X ... (Relational formula (1)).

The main component as herein referred to means the component having the highest content among the components contained in the adhesive layer 200. The same applies to the main component of the durable layer 230. An example layer X contains, as a main component, a component having a glass transition temperature (Tg) of 50°C or more, preferably 60°C or more.

The durable layer 230 in a preferred mode includes a layer containing an ultraviolet absorber. The durable layer 230 in this mode has excellent light resistance of the thermal transfer image 50 of the manufactured decorated product 400. The durable layer 230 in this mode is suitable when the thermal transfer image 50 is an image formed by a sublimation-type thermal transfer method. The durable layer 230 in a more preferable mode has a laminated structure including a layer containing an ultraviolet absorber and the layer X. The durable layer 230 in a more preferable mode has a single-layer structure or a laminated structure including a layer X containing an ultraviolet absorber.

Examples of the ultraviolet absorber include those of benzophenone type, benzotriazole type, benzoate type, triazine type, salicylate type and the like.

Formation of the durable layer 230 on the decorating sheet 100 can be performed by preparing a coating liquid for durable layer in which the components of the durable layer 230 are dispersed or dissolved in an appropriate solvent, and applying and drying this coating liquid on the image layer 10 of the decorating sheet. A durable layer transfer sheet, which is capable of transferring the durable layer 230, may be used to form by transfer the durable layer 230 on the image layer 10 of the decorating sheet 100. The thickness of the durable layer 230 is preferably 0.01 µm or more and 5 µm or less.

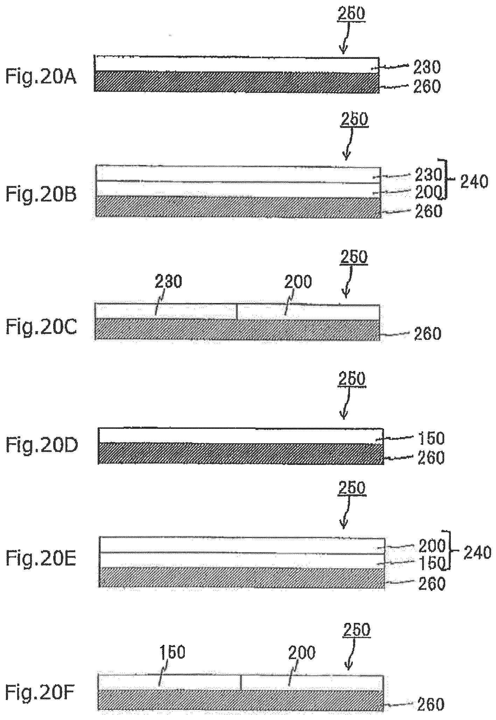

FIGS. 20A, 20B, and 20C are schematic sectional views showing an example of the durable layer transfer sheet capable of transferring the durable layer 230. In this durable layer transfer sheet, the durable layer 230 is provided on the supporter 260. In the transfer sheet of a mode shown in FIG. 20B, a transfer layer 240 including an adhesive layer 200 and a durable layer 230 is provided on the supporter 260. In the transfer sheet of the mode shown in FIG. 20B, the durable layer 230 and the adhesive layer 200 can be collectively formed on the decorating sheet 100 by transferring the transfer layer 240. An example durable layer transfer sheet is provided with a release layer or the like between the supporter 260 and the durable layer 230, and between the supporter 260 and the transfer layer 240. The supporter 260 of the durable layer transfer sheet 250 may be any one as long as it can hold the durable layer and the transfer layer.

Further, the transfer sheet 250 in the mode shown in FIGS. 20A, 20B, and 20C may be a transfer sheet 250 provided with one or more color material layers in a surface-sequential manner with the adhesive layer 200. Such a transfer sheet 250 can perform formation of an image on the image forming layer 10A of the decorating sheet precursor 100A, and transfer of the durable layer 230 onto the image layer 10 of the decorating sheet 100, with one transfer sheet. When formation of an image on the image forming layer 10A is performed by the sublimation-type thermal transfer method, the color material layer may be a dye layer containing a dye such as a yellow dye, a magenta dye, a cyan dye, or a fluorescent dye. When a melt-type thermal transfer method is used, the color material layer may be a molten ink layer which contains a colorant such as a black pigment, a metallic pigment, or a pearl pigment. Further, the transfer sheet 250 in which the dye layer and the molten ink layer are provided in a surface-sequential manner may be used. The same applies to a functional layer 150, and a transfer sheet, which has the transfer layer 240 including the functional layer 150, as shown in FIGS. 20D, 20E, and 20F. Moreover, modes shown in each figure may be combined.

While the adhesive layer 200 is bonded to the image layer 10 side of the decorating sheet 100 in the mode shown in FIG. 1A, the adhesive layer may be bonded to the supporter 1 side of the decorating sheet 100. In this case, the integration with the object to be decorated 300 may be performed on the supporter 1 side of the decorating sheet 100.

### <<Method for manufacturing decorated product according to modification of first embodiment>>

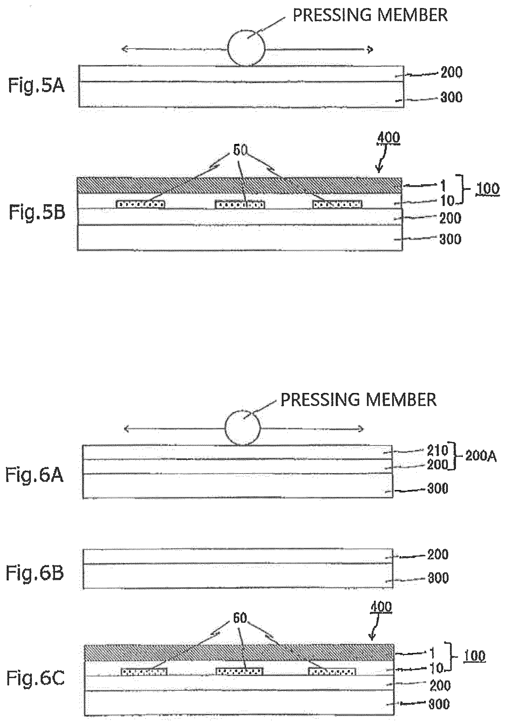

A method for manufacturing a decorated product according to a modification of a first embodiment of the present disclosure includes a bonding step and an integration step. The bonding step in this modification is a step of bonding the adhesive layer 200 to the object to be decorated 300 (see FIG. 5A). The integration step in this modification is a step of integrating the object to be decorated 300, to which the adhesive layer 200 is bonded, and the decorating sheet 100 together (see FIG. 5B) .

The method for manufacturing a decorated product according to the modification of the first embodiment of the present disclosure is different from the method for manufacturing a decorated product according to the first embodiment of the present disclosure in that the adhesive layer 200 is bonded to the object to be decorated 300 in the bonding step. Excepting this difference, the method for manufacturing a decorated product according to the first embodiment of the present disclosure can be appropriately selected and used.

FIG. 6A shows that the adhesive layer 200 of FIG. 5A is the masking member-attached adhesive layer 200A. FIG. 6B shows a state in which the masking member 210 is peeled off from the decorating sheet 100 to which the masking member-attached adhesive layer 200A is bonded. As shown in FIGS. 5B and 6C, the method for manufacturing a decorated product according to the modification of the first embodiment of the present disclosure can manufacture a decorated product 400 in which the object to be decorated 300 and the decorating sheet 100 are integrated together with the adhesive layer 200.

The adhesive layer transfer sheet 250 capable of transferring the adhesive layer 200 may be used to bond the object to be decorated 300 with the adhesive layer 200 by transfer of the adhesive layer 200.

The method for manufacturing a decorated product according to the modification of the first embodiment of the present disclosure may include the durable layer forming step of forming the durable layer 230 on the image layer 10 of the decorating sheet 100 (see FIG. 10A). The durable layer forming step in the method for manufacturing a decorated product according to the modification of the first embodiment of the present disclosure may be performed before the integration step, and may be performed before the bonding step or after the bonding step.

In the mode shown in FIGS. 5B and 6C, the object to be decorated 300 to which the adhesive layer 200 is bonded and the decorating sheet 100 are integrated on the image layer 10 side of the decorating sheet 100. The object to be decorated 300 to which the adhesive layer 200 is bonded may be integrated with the decorating sheet 100 on the supporter 1 side of the decorating sheet 100.

### (Decorating sheet)

Next, the decorating sheet 100 that can be used in the method for manufacturing a decorated product according to the first embodiment of the present disclosure will be described with reference to an example. It can also be applied to the method for manufacturing a decorated product according to the modification of the first embodiment of the present disclosure.

### (Image layer)

As shown in FIGS. 1A, 2A, 8A, 8B, and 8C, the image layer 10 is provided on the supporter 1. The thermal transfer image 50 is formed in the image layer 10.

The thermal transfer image 50 may be a thermal transfer image 50 formed by a sublimation-type thermal transfer method, or may be a thermal transfer image 50 formed by a melt-type thermal transfer method. Both the thermal transfer image 50 formed by the sublimation-type thermal transfer method and the thermal transfer image 50 formed by the melt-type thermal transfer method may be included. The sublimation-type thermal transfer method is an image forming method in which the thermal transfer sheet provided with the color material layer containing a sublimable dye is used to apply thermal energy according to image information to the concerned thermal transfer sheet so that the sublimable dye contained in the color material layer is moved to form a thermal transfer image. The melt-type thermal transfer method is an image forming method in which the thermal transfer sheet provided with the color material layer containing molten ink is used to apply thermal energy according to image information to the concerned thermal transfer sheet so that the color material layer which has been melted or softened by the application of thermal energy is transferred as the entire layer to form a thermal transfer image.

The method for manufacturing a decorated product according to the first embodiment of the present disclosure may use the decorating sheet 100 manufactured in the decorating sheet manufacturing step.

### <Decorating sheet manufacturing step>

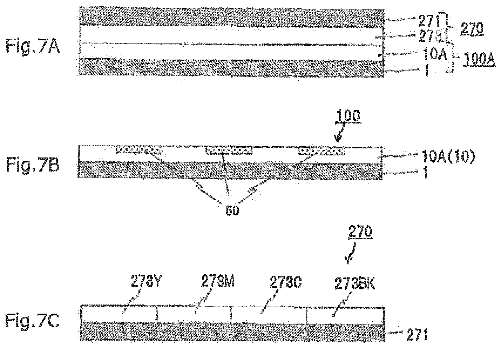

FIGS. 7A and 7B are each an explanatory diagram to show an example of a manufacturing step of the decorating sheet, and FIG. 7C is a schematic sectional view to show an example of the thermal transfer sheet that can be used for forming the thermal transfer image 50.

The decorating sheet manufacturing step is a step of forming the thermal transfer image 50 on the image forming layer 10A of the decorating sheet precursor 100A. Specifically, the image forming layer 10A of the decorating sheet precursor 100A and a color material layer 273 of the thermal transfer sheet 270 are placed to overlap each other (see FIG. 7A). Next, thermal energy is applied to a supporter 271 side of the thermal transfer sheet to form the thermal transfer image 50 on the image forming layer 10A (see FIG. 7B). The thermal transfer image 50 to be formed is the thermal transfer image 50 by the sublimation-type thermal transfer method, or the thermal transfer image 50 by the melt-type thermal transfer method. The thermal transfer sheet 270 has the supporter 271 and the color material layer 273 provided on the supporter 271.

### (Decorating sheet precursor)

The decorating sheet precursor 100A includes the supporter 1 and the image forming layer 10A provided on the supporter 1. It is possible to form an image on the image forming layer 10A by various image forming methods. The image forming layer 10A may have a predetermined image in advance. The components of the image forming layer 10A are not limited, and can be appropriately set according to an image to be formed on the image forming layer 10A. Each constituent of the decorating sheet 100 can be appropriately selected and used excepting the image forming layer 10A of the decorating sheet precursor 100A.

The component contained in the image forming layer 10A may be of one kind, or of two or more kinds. An example image forming layer 10A contains a component that can receive a sublimable dye. The image forming layer 10A of this mode can form a thermal transfer image by the sublimation-type thermal transfer method. The image forming layer 10A of this mode can appropriately select and use a receiving layer conventionally known in the field such as a thermal transfer image receiving sheet. Examples of the component that can receive sublimable dyes include acrylic resin, an acrylic-styrene copolymer, polyolefin, polyvinyl chloride, polyvinylidene chloride, polyvinyl acetate, a vinyl chloride-vinyl acetate copolymer, an ethylene-vinyl acetate copolymer, polyacrylic acid ester, polyester, polystyrene, polyamide, ethylene, a copolymer of olefin and other vinyl polymer, ionomer, cellulose resin, polycarbonate, epoxy resin, polyvinylpyrrolidone, polyvinyl alcohol, gelatin, etc. Polyolefin is exemplified by polypropylene, etc. Polyester is exemplified by polyethylene terephthalate, polybutylene terephthalate, etc.

The image forming layer 10A in a preferred mode contains at least one kind of a vinyl chloride-vinyl acetate copolymer, polyvinyl chloride, an acrylic-styrene copolymer, polyester, and epoxy resin. Among them, the image forming layer 10A containing a vinyl chloride-vinyl acetate copolymer can form a high-density thermal transfer image by the sublimation-type thermal transfer method. As a result, the decorated product 400 to be manufactured can have further improved designability.

In the method for manufacturing a decorated product according to the first embodiment of the present disclosure, the decorating sheet 100 and an object to be decorated can be integrated together by means of an adhesive layer 200 bonded with the decorating sheet 100, or an adhesive layer 200 bonded with the object to be decorated 300. Therefore, it is possible to achieve the image layer 10 having an increased degree of freedom in its design without taking measures for increasing adhesion with the object to be decorated 300 in the image layer 10. For example, as the image layer 10, it is possible to select an image layer with a dye having excellent dyeability. The same applies to the image forming layer 10A of the decorating sheet precursor 100A.

The image forming layer 10A containing a component capable of receiving a sublimable dye can be formed by, for example, preparing a coating liquid in which the components exemplified above are dispersed or dissolved in an appropriate solvent, and applying and drying the coating liquid. The thickness of the image layer 10 and the image forming layer 10A is not limited, and is preferably 1 µm or more and 10 µm or less.

An example image forming layer 10A can form the thermal transfer image 50 by the melt-type thermal transfer method. The image forming layer 10A capable of forming the thermal transfer image 50 by the melt-type thermal transfer method has no limitation, and may be any one as long as it can hold the thermal transfer image 50 formed by the melt-type thermal transfer method.

### (Thermal transfer sheet)

As shown in FIG. 7A, the thermal transfer sheet 270 to be used for manufacturing the decorating sheet 100 includes the supporter 271 of the thermal transfer sheet 270 and the color material layer 273 provided on the supporter 271. The thermal transfer sheet 270 may have any member other than the supporter 271 and the color material layer 273. An example thermal transfer sheet 270 has a color material primer layer provided between the supporter 271 and the color material layer 273. An example thermal transfer sheet 270 is used in the sublimation-type thermal transfer method, and the color material layer 273 contains a sublimable dye and a resin component. The color material layer 273 of this mode can form a thermal transfer image on the image forming layer 10A by the sublimation-type thermal transfer method.

There is no limitation on the sublimable dye, and examples thereof include diarylmethane dyes, triarylmethane dyes, thiazole dyes, merocyanine dyes, pyrazolone dyes, methine dyes, indoaniline dyes, pyrazolomethine dyes, azomethine dyes such as acetophenone azomethine, pyrazoloazomethine, imidazole azomethine, imidazo azomethine and pyridone azomethine, xanthene dyes, oxazine dyes, cyanostyrene dyes such as dicyanostyrene and tricyanostyrene, thiazine dyes, azine dyes, aclysine dyes, benzeneazo dyes, azo dyes such as pyridone azo, thiophen azo, isothiazole azo, pyrrol azo, pyrazole azo, imidazole azo, thiadiazol azo, triazole azo, and disazo, spiropyran dyes, indolinospiropyrane dyes, fluorane dyes, rhodamine lactam dyes, naphthoquinone dyes, anthraquinone dyes, and quinophthalone dyes.

Specifically, red dyes such as MSRedG (Mitsui Chemicals Inc.), Macrolex Red Violet R (Bayer Co., Ltd.), CeresRed 7B (Bayer Co., Ltd.), and Samaron Red F3BS (Mitsubishi Chemical Corporation), yellow dyes such as Holon Brilliant Yellow 6GL (Clariant AG), PTY-52 (Mitsubishi Chemical Corporation), and Macrolex Yellow 6G (Bayer Co., Ltd.), and blue dyes such as Kayaset (registered trademark) Blue 714 (Nippon Kayaku Co., Ltd.), Holon Brilliant Blue S-R (Clariant AG), MS Blue 100 (Mitsui Chemicals Inc.), and C.I.Solvent Blue 63 can be exemplified.

Examples of the resin component include cellulose resin, polyvinyl alcohol, polyvinyl acetate, polyvinyl butyral, polyvinyl acetoacetal, vinyl resin, acrylic resin, polyurethane, polyamide, and polyester. Examples of the cellulose resin include ethyl cellulose, hydroxyethyl cellulose, ethyl hydroxy cellulose, methyl cellulose, and cellulose acetate. Examples of the vinyl resin include polyvinylpyrrolidone. Examples of the acrylic resin include poly (meth) acrylate and poly (meth) acrylamide.

Among these, cellulose resin, vinyl resin, acrylic resin, polyurethane, and polyester are preferable because they have excellent heat resistance and dye transferability.

The color material layer 273 used in the sublimation-type thermal transfer method may contain additives such as inorganic fine particles and organic fine particles. Examples of the inorganic fine particles include carbon black, silica, alumina, titanium dioxide, and molybdenum disulfide. Examples of the organic fine particle include polyethylene wax. The color material layer 273 may contain a release agent. Examples of the release agent include silicone oil, phosphoric acid ester, and fluorine material. The color material layer 273 may contain various curing agents. Examples of the curing agent include isocyanate, epoxy resin, and carbodiimide.

An example thermal transfer sheet 270 is used in the melt-type thermal transfer method, and the color material layer 273 contains a molten ink and a resin component.

Examples of the molten ink include organic pigments, inorganic pigments, and dyes. An example color material layer 273 is a pigment layer containing a pigment. The molten ink preferably has a sufficient coloring density and does not change color or lose color due to light, heat, or the like. The color of the molten ink is not limited to cyan, magenta, yellow, and black, and other colors may be used. Examples of such color material layer 273 include a black pigment layer containing a black pigment (black molten ink layer), a metallic pigment layer containing a metallic pigment (metallic molten ink layer), and a pearl pigment layer containing a pearl pigment (pearl molten ink layer).

Examples of the resin component include an ethylene-vinyl acetate copolymer, an ethylene-acrylic acid ester copolymer, polyethylene, polystyrene, polypropylene, polybuden, petroleum resin, polyvinyl chloride, a vinyl chloride-vinyl acetate copolymer, polyvinyl alcohol, vinylidene chloride resin, (meth) acrylic resin, polyamide, polycarbonate, fluororesin, polyvinyl formal, polyvinyl butyral, acetyl cellulose, nitrocellulose, polyvinyl acetate, polyisobutylene, ethyl cellulose, and polyacetal.

An example color material layer 273 contains wax. Examples of the wax include microcrystalline wax, carnauba wax, paraffin wax, fisher tropsh wax, various low molecular weight polyethylenes, wood wax, beeswax, whale wax, ibota wax, wool wax, celac wax, candelilla wax, petrolactam, polyester wax, partially modified wax, fatty acid ester, and fatty acid amide.

The content of various components contained in the color material layer 273 may be appropriately set in consideration of the density of the thermal transfer image 50, the preservability of the thermal transfer sheet, and the like. An example color material layer 273 contains a resin component and a sublimation dye, and the content of the sublimation dye with respect to the total mass of the resin component is 15% by mass or more and 300% by mass or less.

In the thermal transfer sheet 270 of a mode shown in FIG. 7A, one color material layer 273 is provided on one surface of the supporter 271 of the thermal transfer sheet. As shown in FIG. 7C, a plurality of color material layers having different hues may be provided in a surface-sequential manner. For example, a yellow dye layer 273Y, a magenta dye layer 273M, a cyan dye layer 273C, a black pigment layer 273BK, and the like may be provided in a surface-sequential manner. One or more of dye layers each containing a dye and one or more of pigment layers each containing a pigment may be provided in a surface-sequential manner. A plurality of dye layers may be provided in a surface-sequential manner. A plurality of pigment layers may be provided in a surface-sequential manner.

In an example thermal transfer sheet 270, one or more of the color material layers 273 and the durable layer are provided in a surface-sequential manner on one surface of the supporter 271 of the thermal transfer sheet. The thermal transfer sheet 270 enables to perform formation of a thermal transfer image in the decorating sheet manufacturing step, and formation of the durable layer on the image layer 10 in the durable layer forming step by using one thermal transfer sheet.

### (Supporter)

The supporter 1 of the decorating sheet 100 may support the image layer 10 on which the thermal transfer image 50 is formed. The supporter 1 may have a single-layer structure or a laminated structure. An example supporter 1 has a laminated structure including a plurality of constituent members. An example supporter 1 has a laminated structure including a plurality of substrates. When the supporter 1 has a laminated structure including a plurality of substrates, these substrates may be the same or different. An example supporter 1 has a laminated structure including a paper substrate and a film substrate.

Examples of the substrate constituting the supporter 1 include a paper substrate, and a film substrate (sometimes referred to as a resin substrate and a resin sheet). Examples of the paper substrate include high-quality paper, coated paper, resin-coated paper, art paper, cast-coated paper, paperboard, synthetic paper (polyolefin-based, polystyrene-based), synthetic resin or emulsion-impregnated paper, synthetic rubber latex-impregnated paper, synthetic resin incorporated paper, and a cellulose fiber paper. Examples of the film substrate include polyester such as polyethylene terephthalate and polyethylene naphthalate, polyolefin, polyvinyl chloride, polymethacrylate, polypropylene, polycarbonate, cellulose acetate, a polyethylene derivative, polyamide, and polymethylpentene. These film substrates may be stretched or unstretched. The film substrate may be a white film substrate containing a white pigment or a filler. Further, a film substrate having microvoids inside may be used. Further, commercially available substrates can also be used and, for example, RC paper (STF-150, Mitsubishi Paper Mills Limited), coated paper (Aurora Coat, Nippon Paper Industries Co., Ltd.), high-quality paper, etc., can be suitably used as the paper substrate.

As the substrate, a material having a concavo-convex may be used. Examples of the substrate having a concavo-convex include a substrate containing particles, an embossed substrate, and a blasted substrate.

The thickness of the supporter 1 is preferably 10 µm or more and 300 µm or less, and more preferably 80 µm or more and 200 µm or less. The thickness of the entire decorating sheet 100 including the supporter 1 is preferably 50 µm or more and 1500 µm or less, more preferably 100 µm or more and 300 µm or less, and particularly preferably 150 µm or more and 250 µm or less.

An example supporter 1 includes a void layer. An example supporter 1 has a laminated structure, in which the substrate located on the image layer 10 side is the void layer. The supporter 1 including the void layer can enhance the heat insulating property of the decorating sheet 100. As a result, the density of the thermal transfer image 50 included in the image layer 10 can be increased. The supporter 1 including the void layer can form a high-density thermal transfer image 50 on the image forming layer 10A of the decorating sheet precursor 100A.

Examples of the void layer include a film substrate having a void inside. Examples of the void layer include one which is manufactured by kneading inorganic particles in a polymer and stretching the mixture to generate voids with the inorganic particles as nuclei, or one in which a polymer that is incompatible against the main resin is mixed, and voids are generated when the mixture is stretched. The polymer may be of one kind, or of two or more kinds. The voids contained in the void layer are sometimes referred to as microvoids or vacancies. The void layer may also be referred to as a porous layer, a porous film, or the like. The thickness of the void layer is usually 10 µm or more and 150 µm or less, and preferably 20 µm or more and 80 µm or less. A heat insulation layer may be provided between the supporter 1 and the image layer 10 of various modes described above, and the heat insulation layer may be used as the void layer. The heat insulation layer can appropriately select and use a heat insulation layer conventionally known in the field of thermal transfer image receiving sheet.

When the supporter 1 has a laminated structure including a plurality of substrates, a primer layer may be provided between the substrates. An example primer layer contains an adhesive component and has an adhesive function. Examples of the adhesive component include urethane resin, polyolefin, polyester, acrylic resin, epoxy resin, urea resin, melamine resin, phenol resin, a vinyl chloride-vinyl acetate copolymer, polyimide, polyvinyl acetate, cyanoacrylate, and synthetic rubber resin. Examples of the polyolefin include an α-olefin-maleic anhydride copolymer. Among these, reactive acrylic resin, modified acrylic resin, and the like are preferable. An adhesive component cured with a curing agent may be used. The adhesive component cured with a curing agent has excellent adhesiveness and heat resistance. Examples of the curing agent include an isocyanate compound, aliphatic amine, cyclic aliphatic amine, aromatic amine, and acid anhydride. A substrate whose surface is adhesive, or a substrate whose surface is subjected to an adhesive treatment may be used without providing the primer layer.

The thickness of the primer layer is usually 2 µm or more and 10 µm or less. The primer layer can be formed by preparing a coating liquid for a primer layer in which adhesive components exemplified above and additives to be added as needed are dispersed or dissolved in an appropriate solvent, and applying and drying this coating liquid.

The substrates may be bonded together by means of EC sand lamination using polyethylene, etc. A supporter 1 in which each constituent member is laminated in advance may be used.

### <Separation step>

An example decorating sheet 100 is configured such that a portion or the whole of the supporter 1 can be separated from the image layer 10 side.

The portion to be separated of the supporter 1 may be exemplified by a constituent portion that becomes unnecessary in the finally manufactured decorated product 400, or the like.

When a decorating sheet 100 in which a portion or the whole of the supporter 1 can be separated is used, a separation step may be included. The separation step is a step of separating a portion or the whole of the supporter 1 from the image layer 10 side of the decorating sheet 100 before or after the integration step. The supporter 1 may have a laminated structure that can be separated stepwise in multiple times, and the supporter 1 may be separated stepwise. The stepwise separation of the supporter 1 can be realized by configuring the supporter 1 to have a laminated structure including a plurality of separation assist layers 6 to be described later. It may be realized by other devices. For example, by configuring the supporter 1 to have a laminated structure including the separation assist layer 6, in which a peeling layer 5 is provided between the supporter 1 and the image layer 10, it is possible to perform the separation stepwise.

In the method for manufacturing a decorated product according to the first embodiment of the present disclosure, which includes the separation step, it is possible to increase an apparent thickness of the supporter 1 with the constituent member to be separated, thereby improving handleability of the decorating sheet 100 at the time of manufacturing. By leaving a portion or the whole of the supporter 1 to be separated in the decorated product 400 to be manufactured, it is possible to improve handleability of the decorated product 400 before the part or the whole of the supporter 1 is separated. Even when the decorating sheet 100 is manufactured using the decorating sheet precursor 100A, by configuring such that a portion or the whole of the supporter 1 of the decorating sheet precursor 100A can be separated from the image forming layer 10A side, it is possible to increase an apparent thickness of the supporter 1 at the time of forming a thermal transfer image. This makes it possible to improve transporting performance of the printer at the time of forming the thermal transfer image. Further, by finally separating a portion or the whole of the supporter 1 from the image layer 10 side, it is possible to reduce the thickness of the entire decorated product 400 to be manufactured.

Hereinafter, the decorating sheet 100 which allows a portion or the whole of the supporter 1 to be separated from the image layer 10 side will be described with reference to an example.

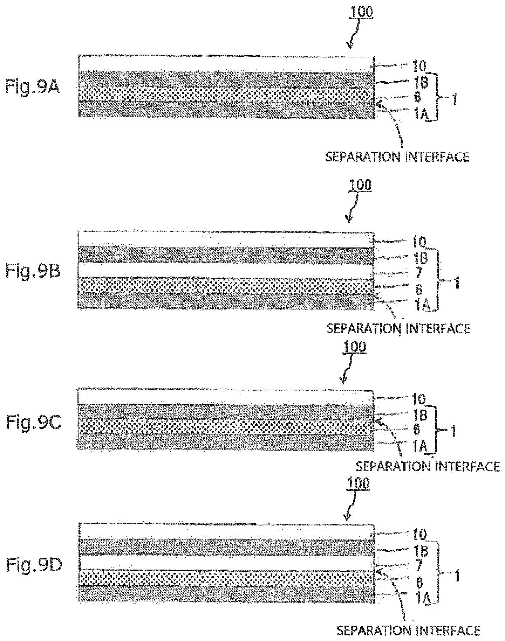

FIGS. 9A, 9B, 9C, and 9D are schematic sectional views showing an example of the decorating sheet 100. In FIGS. 9A, 9B, 9C, and 9D, the thermal transfer image 50 formed on the image layer 10 is omitted. The supporter 1 includes a layer 1A, a layer 1B, and the like. The layer 1A and the layer 1B can appropriately select and use the substrates described above or the like. Further, the layer 1A and the layer 1B may have a single layer structure or a laminated structure. For example, the layer 1A and the layer 1B may have a laminated structure including a plurality of substrates. The supporter 1 may include other constituents. The supporter 1 may include either one of the layer 1A and the layer 1B. The supporter 1 does not have to include both the layer 1A and the layer 1B.

The supporter 1 in a mode shown in FIGS. 9A and 9B has a laminated structure including a separation assist layer 6. In the mode shown in FIGS. 9A and 9B, when supposed that the surface of the separation assist layer 6 on the image layer 10 side is an upper surface and the surface on the opposite side thereof is a lower surface, a constituent member of the supporter 1 located on the lower surface side of the separation assist layer 6 can be separated from the decorating sheet 100 with the lower surface of the separation assist layer 6 being as a separation interface.

The supporter 1 of a mode shown in FIGS. 9C and 9D has a lamination structure including the separation assist layer 6. In the mode shown in FIGS. 9C and 9D, when supposed that the surface of the separation assist layer 6 on the image layer 10 side is an upper surface and the surface on the opposite side thereof is a lower surface, the concerned separation assist layer 6, and a constituent member of the supporter 1 located on the lower surface side of the separation assist layer 6 can be separated from the decorating sheet 100 with the upper surface of the separation assist layer 6 being as a separation interface.

A device for causing the lower surface of the separation assist layer 6 to act as the separation interface is exemplified by a device for adjusting such that the adhesive force between the separation assist layer 6 and the constituent member on the upper surface side of the separation assist layer 6 is higher than the adhesive force between the separation assist layer 6 and the constituent member on the lower surface side of the separation assist layer 6, and a device for imparting peelability to the separation assist layer 6. When the lower surface of the separation assist layer 6 is the separation interface, the separation assist layer 6 is located on the surface after separation. The device for adjusting the adhesive force can be exemplified by a device for adjusting components of the constituent members in contact with the upper surface and the constituent members in contact with the upper surface of the separation assist layer 6, and a device for surface treating the constituent members in contact with the upper surface of the separation assist layer 6.

The device for causing the upper surface of the separation assist layer 6 to act as the separation interface is exemplified by a device for adjusting such that the adhesive force between the separation assist layer 6 and the constituent member on the upper surface side of the separation assist layer 6 is lower than the adhesive force between the separation assist layer 6 and the constituent member on the lower surface side of the separation assist layer 6. When the upper surface of the separation assist layer 6 is configured to be the separation interface, the constituent member that is in contact with the upper surface of the separation assist layer 6 is located on the surface after separation.

While the decorating sheet 100 in which a portion or the whole of the supporter 1 can be separated from the image layer 10 side has been described above, a release member that can be separated from the supporter 1 may be provided on the side of the supporter 1 opposite to the image layer 10. Further, a separation assist layer 6 that does not constitute the supporter 1 may be provided between the supporter 1 and the image layer 10 so that the supporter 1 can be separated.

An example decorating sheet 100 is configured such that, when supposed that the surface of the image layer 10 on the supporter 1 side be a first surface, a part or the whole of the constituent member located on the first surface side of the concerned image layer 10 can be separated from the image layer 10 side. The separation step using the decorating sheet 100 is a step of separating a portion or the whole of the constituent member located on the first surface side of the image layer 10 of the decorating sheet 100 before or after the integration step.

An example supporter 1 has a single-layer structure or a laminated structure including a functional layer 7. An example functional layer 7 is a decoration layer, a concealing layer, or a tactile layer. The supporter 1 including the decoration layer can decorate the manufactured decorated product 400. Examples of the decoration layer include a void layer, a concavo-convex layer, a particle-containing layer, a colored layer, and a vapor deposition layer. An example decoration layer is a colored layer containing a metallic pigment or a colored layer containing a pearl pigment or the like. The decoration layer of this mode has a glossy feel. The decoration layer of this mode can impart a glossy feel to the manufactured decorated product 400. The decoration layer of this mode can impart a glossy feel to the thermal transfer image 50 when the manufactured decorated product 400 is viewed from the object to be decorated 300 side.

An example supporter 1 has a laminated structure, and a part of, instead of the whole of, the supporter 1 can be separated. The supporter 1 of the mode shown in FIGS. 9B and 9D has a laminated structure including a functional layer 7. In the supporter 1 of the mode shown in FIG. 9B, the separation interface is between the separation assist layer 6 and the layer 1A, and the layer 1A can be separated from the image layer 10 side. In the supporter 1 of the mode shown in FIG. 9D, the separation interface is between the functional layer 7 and the separation assist layer 6, and the separation assist layer 6 and the layer 1A can be separated from the image layer 10 side. An example constituent member located between the image layer 10 and the functional layer 7 has transparency. An example supporter 1 has a laminated structure, and the layer located closest to the image layer 10 among the layers constituting the supporter 1 is the functional layer 7.

An example concealing layer is a colored layer containing a white pigment, or a colored layer containing a black pigment. The white pigment can be exemplified by titanium oxide, etc. The black pigment can be exemplified by carbon black, etc. The concealing layer of this mode functions as an underlayer and the concealing layer. The concealing layer may contain any pigment other than the above. When the decorated product 400 manufactured by the manufacturing method of the present disclosure has the concealing layer that functions as the underlayer, the visibility of the thermal transfer image 50 when the decorated product 400 is viewed from the object to be decorated 300 side is excellent. When the decorated product 400 manufactured by the manufacturing method of the present disclosure has the concealing layer, it is possible to conceal texture of the supporter 1 located on the opposite side to the image layer 10. When the decorated product 400 manufactured by the manufacturing method of the present disclosure has the concealing layer, it is possible to reduce visibility of the thermal transfer image from the supporter 1 side. An example supporter 1 includes a paper substrate. An example supporter 1 includes a white paper substrate and a black paper substrate. An example supporter 1 includes a paper substrate and a functional layer 7.

The supporter 1 may include a plurality of functional layers 7. An example supporter 1 includes a plurality of functional layers 7 having different functions. An example supporter 1 includes a plurality of functional layers 7 containing various pigments. An example plurality of functional layers 7 are colored layers. The plurality of colored layers respectively contain any of a black pigment, a white pigment, a pearl pigment, and a metallic pigment. A transparent film or another layer may be provided between each functional layers 7.

When the supporter 1 has a laminated structure including the functional layer 7 and a portion of the supporter 1 can be separated from the image layer 10 side, an example functional layer 7 remains on the image layer 10 side when the portion of the supporter 1 is separated. In an example decorating sheet 100, when the surface on the image layer 10 side of the functional layer 7 is supposed to be an upper surface, the separation assist layer 6 is located on a lower surface side of the functional layer 7 (see FIG. 9D). In this mode, the functional layer 7 remains on the image layer 10 side when a portion of the supporter 1 is separated at the separation interface of the separation assist layer 6.

An example functional layer 7 contains a colorant. Examples of the colorant include dyes, organic coloring pigments, fluorescent pigments, calcium carbonate, titanium oxide, zinc oxide, silica, carbon black, iron oxide, yellow iron oxide, ultramarine blue, hologram powder, aluminum powder, metallic pigments, and pearl pigments.

An example supporter 1 has a laminated structure, and at least one constituent member constituting the supporter 1 contains various pigments or various colorants.

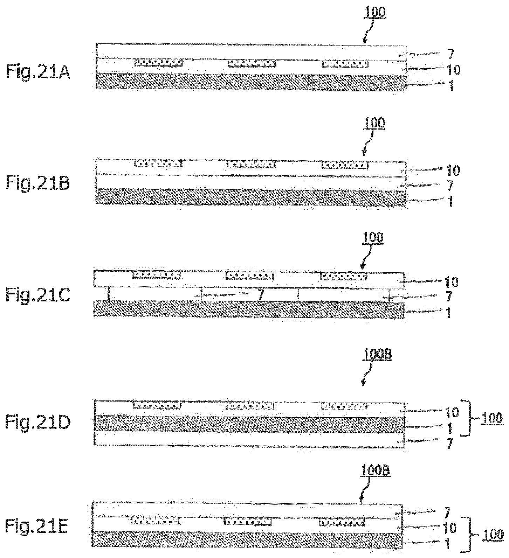

An example decorating sheet 100 is configured such that at least one functional layer is provided on the image layer 10 (see FIG. 21A).

An example decorating sheet 100 is configured such that at least one functional layer is provided between the supporter 1 and the image layer 10 (see FIG. 21B).

An example decorating sheet 100 is configured such that at least one functional layer 7 is provided in a portion between the supporter 1 and the image layer 10 (see FIG. 21C). The functional layer 7 located between the supporter 1 and the image layer 10 may be overlapped with the image 50, or may not be overlapped with the image 50, in a thickness direction.

An example decorating sheet 100 is configured such that at least one functional layer 7 is provided in either one of, or both of, between the supporter 1 and the image layer 10, and above the image layer 10.

An example decorating sheet is a decorating sheet with a functional layer in which the decorating sheet 100 and the functional layer 7 are integrated together. The functional layer 7 can appropriately select and use the functional layer 7 which has been described regarding the supporter 1. An example decorating sheet with a functional layer 100B is configured such that the functional layer 7 and the decorating sheet 100 are integrated together on the supporter 1 side of the decorating sheet 100 (see FIG. 21D). An example decorating sheet with a functional layer 100B is configured such that the functional layer 7 and the decorating sheet 100 are integrated together on the image layer 10 side (see FIG. 21E).

These functional layers 7 can appropriately select and use the functional layers 7 which has been described regarding the supporter 1.

The method for manufacturing a decorated product according to the first embodiment of the present disclosure may include a functional layer forming step of forming a functional layer 7 on the decorating sheet 100, before the integration step. When the functional layer 7 is formed on the side to which the adhesive layer 200 of the decorating sheet 100 is bonded, the functional layer forming step may be performed before the bonding step.

The method for manufacturing a decorated product according to the first embodiment of the present disclosure may include the functional layer forming step of forming the functional layer 7 on the decorating sheet 100, after the integration step.

When formation of the functional layer 7 is performed on the supporter 1 side in which one portion is separated, it may be performed after the separation step.

The functional layer 7 to be formed in the functional layer forming step can appropriately select and use the functional layer 7 which has been described regarding the supporter 1.

The functional layer 7 can be formed by preparing a coating liquid in which components of the functional layer 7 are dissolved or dispersed in an appropriate solvent, and by applying and drying the coating liquid. The functional layer 7 may be formed by transfer by using a transfer sheet which can transfer the functional layer 7. The functional layer 7 may be formed by vapor deposition. Various vapor deposition films and the like may be used as the functional layer 7. The functional layer 7 may have a surface with a concavo-convex shape.

As shown in FIG. 9D, when the separation interface is between the separation assist layer 6 and the functional layer 7, or when the functional layer 7 is located on the surface of the supporter 1 opposite to the image layer 10, the functional layer 7 may be a tactile layer having various tactile feels. The tactile layer is exemplified by a layer containing a foam material, etc., and a layer having a surface of concavo-convex shape. In this mode, the functional layer 7 may be a concealing layer or a decoration layer. In this mode, the functional layer 7 may be a layer having fingerprint resistance or a layer having antistatic properties.

### (Peeling layer)

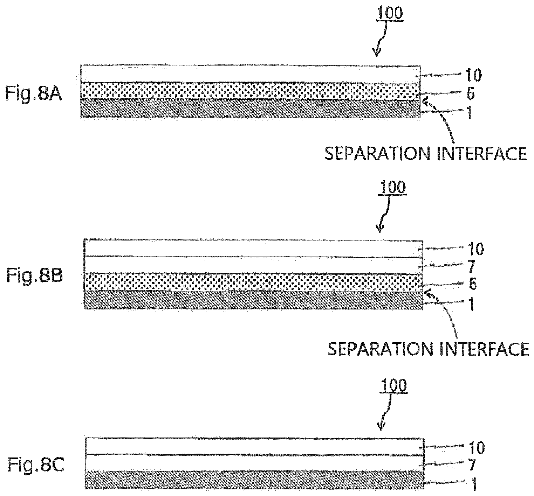

The decorating sheet 100 of the mode shown in FIGS. 8A and 8B is provided with a peeling layer 5 between the supporter 1 and the image layer 10. In this mode, when the surface of the image layer 10 side of the peeling layer 5 is supposed to be an upper surface, a constituent member on a lower surface side of the peeling layer 5 can be separated with the lower surface of the peeling layer 5 being as a peeling interface. The peeling layer 5 is a layer that remains on the image layer 10 side when the supporter 1, etc., is separated.

Examples of the component of the peeling layer 5 include waxes, silicone wax, silicone resin, silicone-modified resin, fluororesin, fluorine-modified resin, polyvinyl alcohol, acrylic resin, heat-crosslinkable epoxy-amino resin, and heat-crosslinkable alkyd-amino resin. The component contained in the peeling layer 5 may be of one type, or of two or more types. The thickness of the peeling layer 5 is preferably 0.5 µm or more and 5 µm or less.

Various layers may be provided between the peeling layer 5 and the image layer 10. The decorating sheet 100 of the mode shown in FIG. 8B is provided with a functional layer 7 between the peeling layer 5 and the image layer 10. The decorating sheet 100 of the mode shown in FIG. 8C is provided with the functional layer 7 between the supporter 1 and the image layer 10, and is configured such that the supporter 1 cannot be separated. In the mode shown in each figure, a plurality of functional layers 7 may be provided between the peeling layer 5 and the image layer 10. In the mode shown in each figure, a plurality of functional layers 7 may be provided between the supporter 1 and the image layer 10.

### (Release layer)

A release layer (not shown) may be provided between the supporter 1 and the image layer 10. The supporter 1 may have a laminated structure, and the layer that is located closest to the image layer 10 among the layers constituting the supporter 1 may be the release layer. The release layer is a layer which is to be separated along with the supporter 1.

Examples of the component of the release layer include waxes, silicone wax, silicone resin, various silicone-modified resins such as silicone-modified acrylic resin, fluorine resin, fluorine-modified resin, polyvinyl alcohol, acrylic resin, heat-crosslinkable epoxy-amino resin, and heat crosslinkable alkyd-amino resin, melamine resin, cellulose resin, urea resin, polyolefin, and fibrous resin. The component contained in the release layer may be of one kind, or of two or more kinds. The thickness of the release layer is preferably 0.1 µm or more and 1 µm or less.

### <<Decorating sheet>>

Next, the decorating sheet of the present disclosure will be described. The decorating sheet 100 of the present disclosure has a laminated structure in which the supporter 1, the image layer 10, and the adhesive layer 200 are laminated in this order (see FIGS. 1A, 2A, and 10B).

The adhesive layer 200 may be the masking member-attached adhesive layer 200A. The durable layer 230 may be provided on the adhesive layer 200. As for the supporter 1 and a constituent provided between the supporter 1 and the image layer 10, the constituents shown in FIGS. 8A to 8C and 9A to 9D can be appropriately selected and used. Further, other constituents may be used.

The decorating sheet 100 of the present disclosure can easily manufacture the decorated product, in which the decorating sheet 100 and the object to be decorated 300 are integrated together, by simply overlapping the object to be decorated 300. The designability of the manufactured decorated product 400 can be improved.

The decorating sheet 100 of the present disclosure can appropriately select and use the decorating sheets 100 of various modes which have been described in the above-described method for manufacturing a decorated product. Although, in the mode shown in each figure, the adhesive layer 200 and the durable layer 230 are described as having a different configuration from that of the decorating sheet 100, an example decorating sheet 100 includes the adhesive layer 200 and the durable layer 230.

### «Decorated product»

Next, the decorated product of the present disclosure will be described. The decorated product 400 of the present disclosure has a configuration in which the decorating sheet 100 of the present disclosure and the object to be decorated 300 are integrated together (see FIGS. 1B, 2C, 5B, and 6C). The decorating sheet 100 as an example constituting the decorated product 400 of the present disclosure has a laminated structure in which the supporter 1, the image layer 10, and the durable layer 230 are laminated in this order. An example decorating sheet 100 has a laminated configuration in which the supporter 1, the image layer 10, and the adhesive layer 200 are laminated in this order. An example decorating sheet 100 has a laminated structure in which the supporter 1, the image layer 10, the durable layer 230, and the adhesive layer are laminated in this order.

The decorated product 400 of the present disclosure includes the image layer 10 formed with the thermal transfer image 50. The decorated product 400 of the present disclosure has excellent designability. An example decorated product 400 is provided with the durable layer 230 between the image layer 10 and the adhesive layer 200. The decorated product 400 in this mode can suppress the migration of the components of the thermal transfer image 50 to the adhesive layer 200 side. The decorated product 400 in this mode can suppress oozing of the thermal transfer image 50.

The decorating sheet 100 as an example constituting the decorated product 400 of the present disclosure has one or more functional layers 7. An example functional layer 7 is a decoration layer. The decorated product 400 including the decoration layer has a high designability.

The decorating sheet 100 as an example constituting the decorated product 400 of the present disclosure has a tactile layer. In an example decorated product, the tactile layer is located on the surface. The decorated product 400 of this mode has a tactile feel.

The decorated product 400 of the present disclosure may be manufactured by a manufacturing method different from the method for manufacturing a decorated product according to the first embodiment of the present disclosure. The same applies to the decorating sheet 100 constituting the decorated product 400 of the present disclosure. The decorated product 400 of the present disclosure may be one in which a portion or the whole of the supporter 1 of the decorating sheet 100 can be separated. The decorated product 400 of the present disclosure may be one in which a portion or the whole of the supporter 1 of the decorating sheet 100 has been separated. An example decorated product 400 of the present disclosure is a decorated product with a separation member in which a separation member is provided on the supporter 1 side. The separation member can be separated from the supporter 1. The separation member may have a single layer structure, or a laminated structure.

### <<Method for manufacturing decorated product according to second embodiment>>

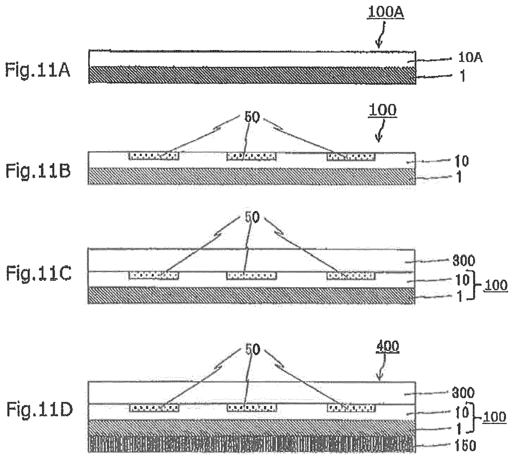

As shown in FIGS. 11A, 11B, 11C, and 11D, a method for manufacturing a decorated product according to a second embodiment of the present disclosure includes a decorating sheet manufacturing step, an integration step, and a functional layer forming step.

The decorating sheet manufacturing step is a step of forming an image 50 on an image forming layer 10A of a decorating sheet precursor 100A to obtain a decorating sheet 100 (see FIG. 11B). The manufactured decorating sheet 100 includes a supporter 1 and an image layer 10 provided on the supporter 1.

The integration step is a step of integrating an object to be decorated 300 with the decorating sheet 100 after the decorating sheet manufacturing step (see FIG. 11C).

The functional layer forming step is a step of forming a functional layer 150 on the decorating sheet 100 after the integration step (see FIG. 11D). The method for manufacturing a decorated product according to the second embodiment of the present disclosure can manufacture the decorated product 400 in which the object to be decorated 300, the decorating sheet 100, and the functional layer 150 are laminated in this order.

The method for manufacturing a decorated product according to the second embodiment of the present disclosure enables to easily manufacture the decorated product 400 having various functions. The method for manufacturing a decorated product according to the second embodiment of the present disclosure enables to manufacture the decorated product 400 having various functions without deteriorating the functions required of the decorated product to be manufactured. The method for manufacturing a decorated product according to the second embodiment of the present disclosure can use a conventionally known decorating sheet precursor, and manufacture a decorated product having a function that is not owned by the decorating sheet precursor.

In the method for manufacturing a decorated product according to the second embodiment of the present disclosure, the functional layer forming step is performed after the decorating sheet manufacturing step. Therefore, the functional layer 150 will not be damaged during the decorating sheet manufacturing step. The functional layer will not be damaged by, for example, heat energy during transportation in a printer or during image formation. The method for manufacturing a decorated product according to the second embodiment of the present disclosure is suitable when physical energy is applied or thermal energy is applied in the decorating sheet manufacturing step. The functional layer to be formed in the functional layer forming step can be excluded from the constituents of the decorating sheet precursor 100A used in the decorating sheet manufacturing step.

### <Decorating sheet manufacturing step>

As shown in FIGS. 11A and 11B, the decorating sheet manufacturing step is a step of forming the image 50 on the image forming layer 10A of the decorating sheet precursor 100A to manufacture the decorating sheet 100. The decorating sheet precursor 100A includes the supporter 1, and the image forming layer 10A provided on the supporter 1.

There is no limitation on the image forming method, and various conventionally known image forming methods can be used. The image forming layer 10A may be any one which is capable of forming the image 50 by various image forming methods.

The image forming method is exemplified by the sublimation-type thermal transfer method and the melt-type thermal transfer method described regarding the method for manufacturing a decorated product according to the first embodiment of the present disclosure. In addition, it is exemplified by an inkjet printing method, a toner printing method (laser printing method), and the like.

The inkjet printing method is an image forming method whereby ink for inkjet is ejected from a nozzle by a pressure wave generated by piezo drive, or ink is ejected by generating bubbles in a tube by heating, and thereby the ink is adhered to the image forming layer 10A to form an image. The toner printing method is an image forming method whereby toner is fixed (fused) by an electrostatic transfer method to the image forming layer 10A by the heat of a laser or the like.

The image may be formed by an offset printing method, a gravure printing method, a flexographic printing method, a screen printing method, or the like. Further, the image may be formed by a printing method other than those.

### (Decorating sheet precursor)

The decorating sheet precursor 100A to be used in the method for manufacturing a decorated product according to the second embodiment of the present disclosure is provided with the image forming layer 10A on the supporter 1. In the method for manufacturing a decorated product according to the second embodiment of the present disclosure, all the constituent members other than the image forming layer 10A will be collectively described by referring them as the supporter 1. It is supposed that all the constituent members other than the image forming layer 10A are included in the supporter 1. For example, when the decorating sheet precursor 100A has a laminated structure in which a paper substrate, a primer layer, and the image forming layer 10A are laminated in this order, the paper substrate and the primer layer are constituent members of the supporter 1.

### (Image forming layer)

The image forming layer 10A may be appropriately selected depending on the image forming method when an image is formed in the decorating sheet manufacturing step.

The thickness of the image forming layer 10A is not limited, and may be appropriately set depending on the image forming method. The thickness of the image forming layer 10A which is capable of forming an image by the thermal transfer method is preferably 0.1 µm or more and 10 µm or less. The thickness of the image forming layer 10A which is capable of forming an image by the inkjet printing method is preferably 0.1 µm or more and 50 µm or less, more preferably 1 µm or more and 40 µm or less, and further preferably 3 µm or more and 30 µm or less. The thickness of the image forming layer 10A which is capable of forming an image by the toner printing method is preferably 0.01 µm or more and 5 µm or less, and more preferably 0.05 µm or more and 1 µm or less.

The image forming layer 10A may be formed by applying and drying a coating liquid, or may be formed by bonding a sheet or the like with the supporter 1.

### (Supporter)

The supporter 1 of the decorating sheet precursor 100A may support the image forming layer 10A. The supporter 1 of the decorating sheet precursor 100A can appropriately select and use the constituents of the supporter 1, which have been described in the method for manufacturing a decorated product according to the first embodiment.

An example supporter 1 includes at least one of functional layers which are described in the functional layer forming step.

An example supporter 1 includes at least one of a decoration layer, a concealing layer, and a tactile layer.

An example supporter 1 includes a void layer. The supporter 1 including the void layer can form an image with a high density in the image forming layer 10A.

An example supporter 1 has a laminated structure, in which the layer located closest to the image forming layer 10A is a primer layer.

An example supporter 1 has a laminated structure, in which the layer located furthest from the image forming layer 10A is a back face layer.

An example supporter 1 includes a peeling layer.

An example supporter 1 includes a release layer.

An example supporter 1 includes a paper substrate.

One portion of an example supporter 1 can be separated from the image forming layer 10A side.

An example supporter 1 includes one or more separation assist layers 6.

An example separation assist layer 6 is a peeling layer. An example peeling layer has a surface of concavo-convex structure. An example peeling layer contains colorants, particles, etc. Such a peeling layer functions as a decoration layer 7.

An example separation assist layer 6 is a release layer.

An example separation assist layer 6 has adhesiveness.

In an example supporter 1, the layer that remains on the surface of the image forming layer 10A side when a portion of the supporter 1 is separated is an adhesion layer. In an example functional layer forming step, the decorating sheet 100 and the functional layer 150 are brought into close contact with each other by the adhesion layer remaining on the surface. The adhesion layer can appropriately select and use the constituents described regarding the primer layer. An example adhesion layer is a layer in which the adhesiveness increases afterward, or the adhesiveness manifests afterward.

An example supporter 1 includes a paper substrate, and the paper substrate can be separated from the image forming layer 10A.

The supporter 1 can appropriately select and use any mode of the decorating sheet 100 and the supporter 1 of the decorating sheet precursor 100A which have been described in the method for manufacturing a decorated product according to the first embodiment of the present disclosure.

The thickness of the supporter 1 is not limited, but is preferably 1 µm or more and 300 µm or less. The thickness of the decorating sheet precursor 100A is not limited, and may be appropriately determined in consideration of the image forming method and the like when an image is formed on the image forming layer 10A. For example, when the image is formed in the printer, the thickness may be determined in consideration of the transportability of the printer. The thickness of an example decorating sheet precursor 100A is 100 µm or less. By manufacturing the decorated product using the decorating sheet precursor 100A having this thickness, the appearance of the decorated product can be improved. When the thickness of the decorating sheet precursor 100A is 100 µm or less and the transportability of the printer is insufficient, a portion of the supporter 1 may be made separable such that the thickness of the decorating sheet precursor 100A is 100 µm or less after the portion of the supporter 1 is separated.

In a sample supporter 1, a portion thereof can be separated from the image forming layer 10A side. The decorating sheet precursor 100A including the supporter 1 of this mode has excellent handleability. Further, when the decorating sheet manufacturing step is performed by a printer or the like, it is possible to improve the transporting performance of the printer at the time of image forming by appropriately setting the thickness of a portion of the supporter that can be separated such that the thickness of the entire decorating sheet precursor 100A before the one portion of the supporter 1 is separated is a thickness suitable for the transporting performance of the printer. Further, by separating a portion of the supporter 1 after the decorating sheet manufacturing step, the thickness of the entire decorated product 400 to be manufactured can be reduced.

An example decorating sheet precursor 100A is a decorating sheet precursor with a separation member in which a separation member, the supporter 1, and the image forming layer 10A are laminated in this order. The separation member can be separated from the supporter 1. The separation member may have a single-layer structure or a laminated structure.

When the supporter 1 includes a paper substrate and when it is desired to impart a predetermined transparency to the decorated product 400 to be manufactured by the method for manufacturing a decorated product of the present disclosure, it may be configured such that the paper substrate can be separated. Further, when the supporter 1 includes a back face layer or the like, it may be configured such that the back face layer can be separated.

### <Integration step>

As shown in FIG. 11C, the integration step is a step of integrating the decorating sheet 100 manufactured in the decorating sheet manufacturing step with the object to be decorated 300. The object to be decorated 300 can use the object to be decorated 300 that has been described in the method for manufacturing a decorated product according to the first embodiment of the present disclosure.

The integration step may appropriately select and perform the method which has been described in the integration step of the method for manufacturing a decorated product according to the first embodiment of the present disclosure. The integration may be performed by any other method. For example, the integration may be performed by transferring a transfer layer of the decorating sheet 100 to the object to be decorated 300. The transfer layer of the decorating sheet 100 includes the image layer 10 and can be transferred to the object to be decorated 300 side. An example decorating sheet 100 includes a peeling layer and a release layer. The peeling layer is included in the transfer layer. The release layer is not included in the transfer layer. The transfer layer including an example image layer 10 can be transferred by the thermal transfer method. Such decorating sheet 100 is exemplified by an intermediate transfer medium in which an image is formed, and the like.

Using the separation assist layer 6, the layer 1B, and the image layer 10 of the mode as shown in FIG. 9A as transfer layers, the transfer layers separated from the layer 1A may be transferred to the object to be decorated 300, thereby being integrated with the object to be decorated 300. It may be configured such that the layer 1A of the mode shown in FIG. 9A has a laminated structure, and a portion of the layer 1A can be separated between any layers constituting the layer 1A before separation on the lower surface side of the separation assist layer 6. Further, a heat seal layer or the like may be formed on the image layer 10 of the decorating sheet 100 before the transfer.

Using the layer 1B and the image layer 10 of the mode shown in FIG. 9A as the transfer layer, the transfer layer separated from the separation assist layer 6 may be transferred to the object to be decorated 300. In this mode, the layer 1A can be separated from the image layer 10 side. After the layer 1A is separated, the transfer layer including the layer 1B and the image layer 10 can be transferred onto the object to be decorated 300, thereby being integrated with the object to be decorated 300. In the decorating sheet 100 of this mode, the layer 1A can be separated at an interface between the layer 1A and the separation assist layer 6, and after the layer 1A is separated, the separation assist layer 6 can be separated at an interface between the separation assist layer 6 and the layer 1B. Multiple times of separations of the supporter 1 can also be applied in the mode shown in each figure. When the supporter 1 includes a decoration layer, a concealing layer, a tactile layer, and the like, the supporter 1 may be configured such that the decoration layer, the concealing layer, and the tactile layer are transferred together with the image layer 10 to the object to be decorated 300 side. For example, in the mode shown in FIG. 9A, when only the interface between the separation assist layer 6 and the layer 1A is a separation interface, one or more of the decoration layer, the concealing layer, and the tactile layer may be located on the image layer 10 side with respect to the separation assist layer 6. Further, in the mode shown in FIG. 9A, when the interface between the separation assist layer 6 and the layer 1A is a separation interface, and further when the interface between the layer 1B and the separation assist layer 6 is a peeling interface, it may be configured such that one or more of the decoration layer, the concealing layer, and the tactile layer are located on the image layer 10 side with respect to the layer 1B. The same applies to a case in which a surface of the layer 1B on the image layer 10 side is the separation interface.

### (Durable layer)

When the decorating sheet 100 and the object to be decorated 300 are integrated together by using the adhesive layer 200, a durable layer 230 may be provided between the decorating sheet 100 and the adhesive layer 200. For example, when the adhesive layer 200 is bonded to the image layer 10 side of the decorating sheet 100, the durable layer 230 may be provided on the image layer 10 of the decorating sheet 100 before the bonding. When the adhesive layer 200 is bonded to the object to be decorated 300, the durable layer 230 is provided on the image layer 10 of the decorating sheet 100 before integrating the decorating sheet 100 with the object to be decorated 300. The formation of the durable layer 230 is particularly suitable in the decorating sheet manufacturing step when the image to be formed on the image layer 10 is an image formed by the sublimation-type thermal transfer method.

The durable layer 230 can appropriately select and use the durable layer 230 described in the method for manufacturing a decorated product according to the first embodiment of the present disclosure. The same applies to the method for forming the durable layer 230.

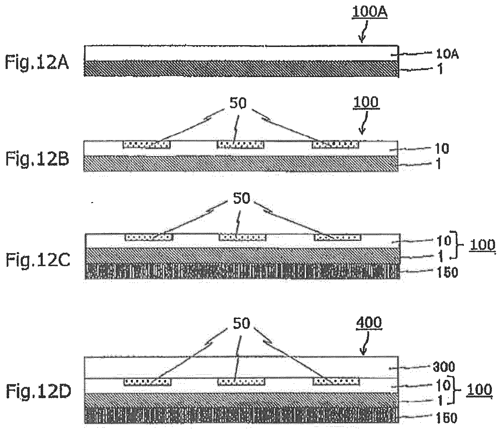

In the mode shown in FIGS. 11C and 12D, the decorating sheet 100 and the object to be decorated 300 are integrated together on the image layer 10 side of the decorating sheet 100. The decorated product 400 manufactured in this mode has a laminated structure in which the object to be decorated 300, the image layer 10, and the supporter 1 are laminated in this order. In this mode, the image of the image layer 10 can be protected by the supporter 1.

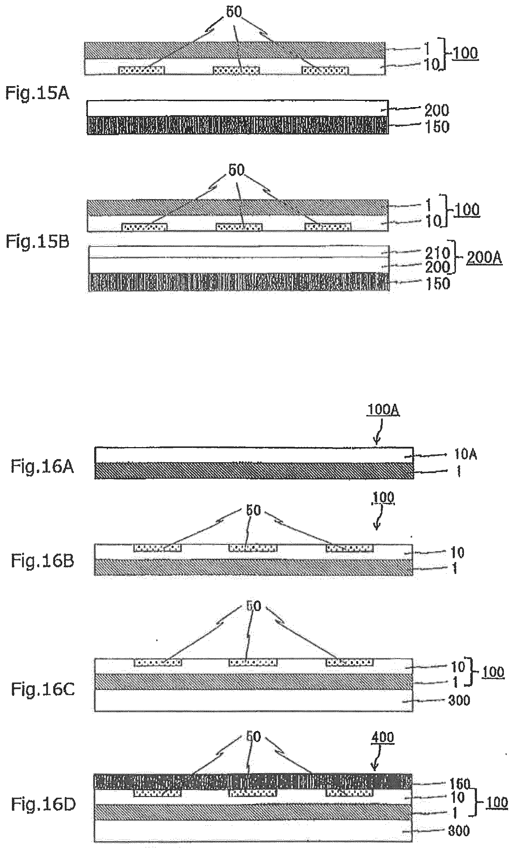

As shown in FIG. 16C, the decorating sheet 100 and the object to be decorated 300 may be integrated together on the supporter 1 side of the decorating sheet 100. The decorating sheet 100 and the object to be decorated 300 may be integrated together by using the adhesive layer 200. Similarly, in the mode shown in FIGS. 5 and 6, the decorating sheet 100 and the object to be decorated 300 are integrated together on the image layer 10 side of the decorating sheet 100, but the decorating sheet 100 and the object to be decorated 300 may be integrated together on the supporter 1 side of the decorating sheet 100. FIG. 16 is a set of process views showing an example of the method for manufacturing a decorated product according to the second embodiment of the present disclosure, which is different from the integration step of the mode shown in FIG. 11 in that the orientation of the decorating sheet 100 when the decorating sheet 100 and the object to be decorated 300 are integrated together is different. FIGS. 16A and 16B are in common with FIGS. 11A and 11B.

### <Separation step>

When a portion of the supporter 1 of the decorating sheet precursor 100A can be separated from the image layer 10 side, a separation step of separating the portion of the supporter 1 from the image layer 10 side may be performed before the integration step or after the integration step. In the separation step, the separation may be performed once in which a portion of the supporter 1 is separated, or the separation may be performed in a plurality of times in which a supporter 1 includes a plurality of separation assist layers 6 and the like.

Examples of the decorating sheet 100 which can be used for the method for manufacturing a decorated product according to the second embodiment of the present disclosure include: (i) the decorating sheet 100 in which an image is formed on the image forming layer 10A of the decorating sheet precursor 100A, (ii) the decorating sheet 100 in which an image is formed on the image forming layer 10A of the decorating sheet precursor 100A, and the durable layer 230 is provided on the image layer 10, (iii) the decorating sheet in which an image is formed on the image forming layer 10A of the decorating sheet precursor 100A, and the adhesive layer 200 is provided on the image layer 10, (iv) the decorating sheet 100 in which an image is formed on the image forming layer 10A of the decorating sheet precursor 100A, and the durable layer 230 and the adhesive layer 200 are provided in this order on the image layer 10, and (v) the decorating sheet 100 in which an image is formed on the image forming layer 10A of the decorating sheet precursor 100A and the adhesive layer 200 is provided on the opposite side to the image layer 10 of the supporter 1. A decorating sheet that combines the above-described modes may be used. The adhesive layer 200 may be a masking member-attached adhesive layer 200A. The supporter 1 of the decorating sheet of these modes may be one in which a portion thereof can be separated from the image layer 10 side.

The decorating sheets 100 of these modes may be a decorating sheet with a separation member which is provided with a separation member, which can be separated from the supporter 1, on the supporter 1 side. A decorating sheet precursor 100A with a separation member may be adopted. The separation member may have a single-layer structure or a laminated structure.

### <Functional layer forming step>

As shown in FIG. 11D, the functional layer forming step is a step of forming the functional layer 150 on the side of the decorating sheet 100 opposite to the object to be decorated 300 after the integration step. Undergoing this step makes it possible to manufacture the decorated product 400. The manufactured decorated product 400 has a laminated structure in which the object to be decorated 300, the decorating sheet 100, and the functional layer 150 are laminated in this order. In the mode shown in FIG. 11D, the supporter 1 is located on the opposite side to the object to be decorated of the decorating sheet 100. In the mode shown in FIG. 11D, the functional layer 150 is formed on the supporter 1. As shown in FIG. 16D, the functional layer 150 may be formed on the image layer 10 side such that the orientation of the decorating sheet 100 in the integration step is different.

When a portion of the supporter 1 can be separated and the functional layer 150 is formed on the supporter 1, the functional layer 150 may be formed on the supporter 1, which remains on the image layer 10 side, after the separation step.

The functional layer 150 is a layer that imparts various functions to the decorated product 400 manufactured by the method for manufacturing a decorated product of the present disclosure, and may be appropriately selected according to the functions required of the decorated product 400 to be manufactured.

An example functional layer 150 has a function of decorating an image formed on the image layer. An example functional layer 150 is a decoration layer such as a void layer, a concavo-convex layer, a particle-containing layer, a colored layer, and a vapor deposition layer. Hereinafter, these layers may be collectively referred to as a decoration layer. The functional layer 150 may have a laminated structure in which a plurality of decoration layers are laminated.

The functional layer 150 such as the void layer and the concavo-convex layer can impart a matte feel to the decorated product 400 to be manufactured. The functional layer such as the particle-containing layer can impart a matte feel to the decorated product 400 to be manufactured by appropriately selecting the particles. Further, it is possible to adjust the transparency or the like of the decorated product 400 to be manufactured.

The concavo-convex layer as an example of the functional layer has a concavo-convex structure on either one surface, or on both surfaces. In the decorated product to be manufactured, the surface of the concavo-convex layer on the object to be decorated 300 side may have a concavo-convex structure, or the surface on the opposite side may have a concavo-convex structure. Both surfaces may have a concavo-convex structure.

An example concavo-convex layer contains particles, and some of the particles protrudes. An example concavo-convex layer contains particles, and the surface of the concavo-convex layer is raised. An example concavo-convex layer is a film which contains particles. An example concavo-convex layer is a film into which particles are kneaded. An example concavo-convex layer is a film subjected to a surface treatment. The method of the surface treatment is exemplified by embossing, and blasting, etc. The height of the convex portions and the distance between the convex portions may be appropriately determined according to functions required of the functional layer 150.

An example particle-containing layer of the functional layer is a layer containing particles. Examples of the particles include inorganic particles and organic particles. Examples of such particle include silica, calcium carbonate, barium sulfate, titanium oxide, porous particles, hollow particles, talc, dicarboxylic acid ester amide, and polyethylene. The particle-containing layer may use a film substrate or the like into which particles are kneaded. A coating liquid in which particles and a binder are dispersed or dissolved in an appropriate solvent may be prepared, and a coated layer obtained by applying and drying this coating liquid may be used as the particle-containing layer.

An example colored layer of the functional layer contains a colorant. Examples of the colorant include dyes, organic coloring pigments, fluorescent pigments, calcium carbonate, titanium oxide, zinc oxide, silica, carbon black, iron oxide, yellow iron oxide, ultramarine blue, hologram powder, aluminum powder, metallic pigments, and pearl pigments. When the functional layer 150 is the colored layer containing a black pigment such as carbon black or a white pigment such as titanium oxide, it is possible to impart a function as a concealing layer to the colored layer by appropriately adjusting the content of the pigments and the like. In this case, the visibility of the image 50 can be improved when the decorated product 400 manufactured by the method for manufacturing a decorated product of the present disclosure is visually recognized from the opposite side to the functional layer 150. When the functional layer 150 is the colored layer containing a metallic pigment, a pearl pigment, or the like, it is possible to impart a luxurious feel to the decorated product 400 to be manufactured.

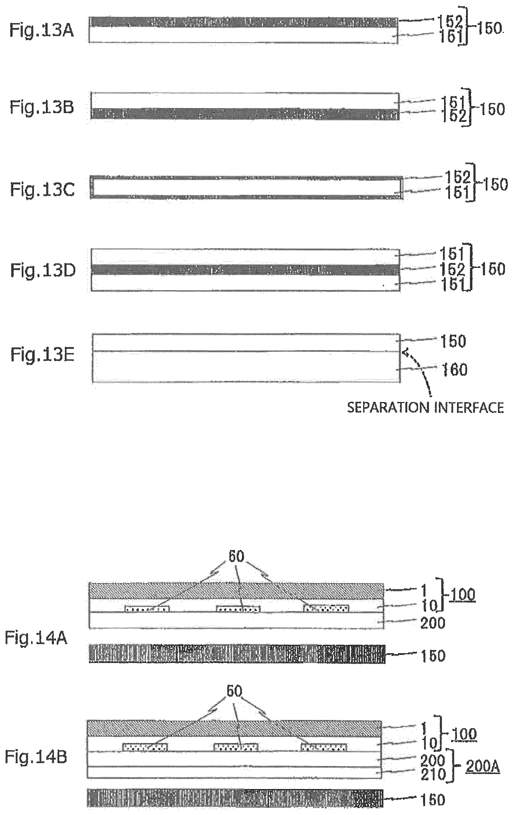

An example functional layer 150 includes a vapor deposition layer. As shown in FIG. 13C, such functional layer 150 is exemplified by one provided with a vapor deposition layer 152 which is formed by vapor deposition on a functional layer supporter 151. The vapor deposition layer 152 may be formed on either one surface of the functional layer supporter 151. The functional layer 150 including the vapor deposition layer can impart designability such as concealability and a glossy feel to the decorated product 400 to be manufactured.

The functional layer 150 may have a function different from the function capable of decorating the image formed on the image layer. Examples of the functional layer having the function different from the function of decorating an image include an antistatic layer, a tactile layer, a fingerprint resistant layer, a tactile layer, and a protective layer.

FIG. 13 is a set of schematic sectional views showing an example of the functional layer 150. The functional layer 150 may have a single-layer structure, or may have a laminated structure as shown in FIGS. 13A, 13B, 13C, 13D, and 13E. The functional layer 150 of a mode shown in FIGS. 13A and 13B has a laminated structure in which layers 152 having various functions are laminated on the functional layer supporter 151. The layer 152 having various functions is exemplified by a decoration layer, a layer having a function different from the function of decorating an image, and the like. The functional layer supporter 151 is exemplified by various substrates, for example, a film substrate, etc. The functional layer supporter 151 may be used as the functional layer. The layer having various functions may be formed by applying and drying a coating liquid, or may be formed by film bonding, vapor deposition, or the like. The functional layer 150 of a mode shown in FIG. 13C is formed with the vapor deposition layer 152 on the functional layer supporter 151 by vapor deposition. In FIG. 13C, the vapor deposition layer 152 is provided on the entire circumference of the functional layer supporter 151, but the vapor deposition layer 152 may be formed on either one surface of the functional layer supporter 151. The functional layer 150 of a mode shown in FIG. 13D shows a mode in which the layer 152 having various functions is sandwiched between film substrates 151. The functional layer 150 is not limited to the illustrated modes, and may be any combination of these. Further, any constituent other than those may be included. The functional layer 150 may include a plurality of decoration layers. A mode shown in FIG. 13E is a functional layer with a separation member in which the functional layer 150 and a separation member 160 are integrated together. The separation member 160 can be separated from the functional layer 150. The mode shown in FIG. 13E has good workability when the functional layer 150 is formed on the decorating sheet 100. Examples of the separation member include a release film, a separate paper, a separate film, a peeling film, and a peeling paper. As the supporter 1, some or all of the constituents of these functional layers 150 may be applied.

An example method for manufacturing a decorated product of the present disclosure forms the functional layer 150 on the supporter 1 side of the decorating sheet 100. In this manufacturing method, the integration step is performed on the image layer 10 side of the decorating sheet 100. The manufactured decorating product 400 has a laminated structure in which the object to be decorated 300, the image layer 10, the supporter 1, and the functional layer 150 are laminated in this order. The manufacturing method can sufficiently exert the function of the functional layer 150. When the object to be decorated 300 of the decorated product 400 manufactured by this manufacturing method has transparency and the functional layer 150 is used as the decoration layer, it is possible to improve the designability of an image when the image of the image layer 10 is visually recognized from the object to be decorated 300 side. By appropriately selecting the functional layer 150, it is possible to improve the designability of the image when visually recognized from the supporter 1 side.

Another example method for manufacturing a decorated product of the present disclosure forms the functional layer 150 on the image layer 10 side of the decorating sheet 100. In this manufacturing method, the integration step is performed on the supporter 1 side of the decorating sheet 100. The manufactured decorating product 400 has a laminated structure in which the object to be decorated 300, the supporter 1, the image layer 10, and the functional layer 150 are laminated in this order. In this manufacturing method, the image of the image layer 10 can be protected by the functional layer 150.

When the decorated product 400 in the mode shown in FIG. 11D is intended to be the decorated product 400 in which the image of the image layer 10 can be visually recognized from the functional layer 150 side, the functional layer 150 and the supporter 1, which have transparency to allow the image of the image layer 10 to be visually recognized, may be used. On the other hand, to obtain the decorated product in which the image 50 of the image layer 10 can be visually recognized from the object to be decorated 300 side, the object to be decorated 300 having transparency may be used.

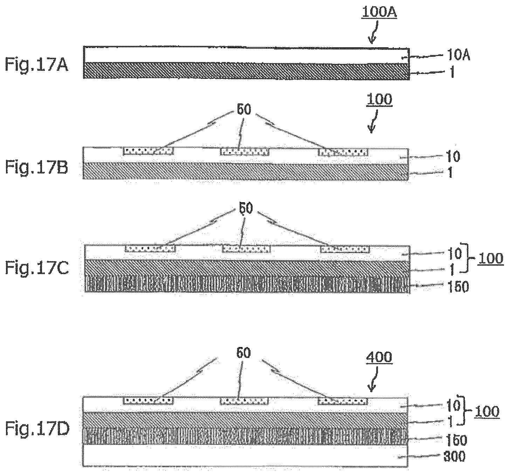

The method for forming the functional layer 150 is not limited, and is exemplified by a method for bonding the decorating sheet 100 with the functional layer 150 by using an adhesive layer. As shown in FIGS. 14A and 14B, the adhesive layer 200, or the masking member-attached adhesive layer 200A is bonded onto the decorating sheet 100 integrated with the object to be decorated 300. Alternatively, as shown in FIGS. 15A and 15B, the adhesive layer 200, or the masking member-attached adhesive layer 200A is bonded to the functional layer 150. In a mode shown in FIGS. 14A, and 14B, and FIGS. 15A and 15B, description of the object to be decorated 300 is omitted. In the mode shown in FIGS. 14A and 14B, the functional layer 150 is formed on the image layer 10 side of the decorating sheet 100, but integration of the object to be decorated 300 with the decorating sheet 100 is performed on the image layer 10 side of the decorating sheet 100 to form the functional layer 150 on the supporter 1 side of the decorating sheet 100 (see FIG. 17C) .

When a portion of the supporter 1 can be separated, the adhesion layer may be located on the surface of the supporter 1 which remains on the image layer 10 side after the separation, and the decorating sheet 100 and the functional layer 150 may be bonded together with the adhesion layer which is exposed after the separation.

As shown in FIGS. 20D, 20E, and 20F, the functional layer 150 may be formed by transfer on the supporter 260 using a functional layer transfer sheet 250 provided with the functional layer 150. FIGS. 20D, 20E, and 20F are each a schematic sectional view showing an example of the functional layer transfer sheet 250 which can be used in the functional layer forming step. These transfer sheets may include a release layer, etc., between the supporter 260 and the functional layer 150, and between the supporter 260 and the transfer layer 240 for improving the peelability (transferability) of these layers. The functional layer 150 may be formed on the decorating sheet 100 by using the functional layer 150 having a self-adsorption property. The functional layer 150 having the self-adsorption property means the functional layer 150 which has a property to allow adsorption to the decorating sheet 100 by a mechanism of the functional layer 150 itself without using an adhesive layer and an adhesion layer, etc. The functional layer 150 may be formed on the decorating sheet 100 by using the functional layer 150 having a cell suction cup structure, etc.

The transfer sheet 250, which is provided with the transfer layer 240 on the supporter 260 as shown in FIG. 20E, may be used. The transfer layer 240 has a laminated structure including the functional layer 150 and the adhesive layer 200. The transfer sheet 250 in which the functional layer 150 and the adhesive layer 200 are provided in a surface-sequential manner on the supporter 260 as shown in FIG. 20F may also be used. The functional layer 150 and the adhesive layer 200 can be peeled off from the supporter 260. In the transfer sheet 250 of a mode shown in FIG. 20F, an adhesive layer can be formed by transfer on the decorating sheet 100, and then the functional layer 150 can be formed by transfer on the adhesive layer 200.

After integrating the decorating sheet 100 and the object to be decorated 300 together on the image layer 10 side of the decorating sheet 100 (see FIG. 11C), the adhesive layer 200 (not shown) is transferred to the supporter 1 side of the decorating sheet 100. Next, the functional layer 150 may be bonded to the supporter 1 side of the decorating sheet 100 with the adhesive layer 200 transferred to the decorating sheet 100.

Next, an example of the decorated product 400 to be manufactured by the method for manufacturing a decorated product according to the second embodiment of the present disclosure will be described. An example decorated product 400 has a laminated structure in which the object to be decorated 300, the image layer 10, the supporter 1, and the functional layer 150 are laminated in this order. When the object to be decorated 300 of the decorated product 400 of this mode has transparency and the functional layer 150 is used as the decoration layer, it is possible to improve the designability of the manufactured decorated product 400 when visually recognized from the object to be decorated 300 side. The supporter 1 in this mode may include one or more of the various layers exemplified in the functional layer 150. An example supporter 1 has a transparency to allow the functional layer 150 to be visually recognized from the object to be decorated 300 side.

An example decorated product 400 has a laminated structure in which the object to be decorated 300, the supporter 1, the image layer 10, and the functional layer 150 are laminated in this order. An example functional layer 150 in this mode includes either one, or both of a void layer and a concavo-convex layer. A decorated product 400 of this mode has a matte feel. When the object to be decorated 300 and the supporter 1 of the decorated product 400 of this mode have transparency, an image of the image layer 10 can be visually recognized from the object to be decorated 300 side. The supporter 1 in this mode may include one or more of various layers exemplified in the functional layer 150.

### <<Method for manufacturing decorated product according to modification of second embodiment>>

A method for manufacturing a decorated product according to a modification of the second embodiment of the present disclosure includes a decorating sheet manufacturing step, a functional layer forming step, and an integration step.

The decorating sheet manufacturing step is a step of forming an image 50 in an image forming layer 10A of a decorating sheet precursor 100A (see FIGS. 12A and 12B).

The functional layer forming step is a step of forming a functional layer 150 on the decorating sheet 100 after the decorating sheet manufacturing step (see FIG. 12C).

The integration step is a step of integrating the decorating sheet 100 and an object to be decorated 300 together after the functional layer forming step (see FIG. 12D).

While, in the method for manufacturing a decorated product according to the second embodiment of the present disclosure, the functional layer 150 is formed on the decorating sheet 100 after the decorating sheet 100 and the object to be decorated 300 are integrated together, the method for manufacturing a decorated product according to the modification is different in that the decorating sheet 100 formed with the functional layer 150, and the object to be decorated 300 are integrated together after the functional layer 150 is formed on the decorating sheet 100. That is, they differ in that the order of the functional layer forming step and the integrating step is different. Excepting this difference, the configurations and steps described above can be appropriately selected and used. Detailed description of the decorating sheet 100, the object to be decorated 300, the decorating sheet manufacturing step, and the like will be omitted.

### <Functional layer forming step according to modification>

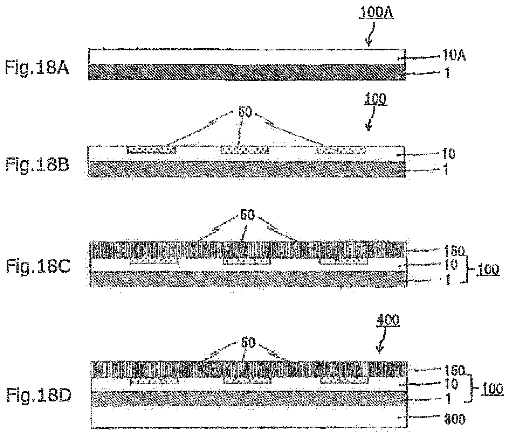

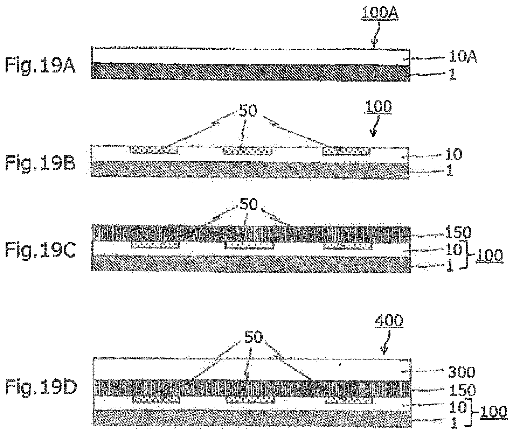

FIGS. 12A to 12D, FIGS. 17A to 17D, FIGS. 18A to 18D, and FIGS. 19A to 19D are process views each showing an example of the method for manufacturing a decorated product according to the modification, and FIGS. 12C, 17C, 18C, and 19C each shows the functional layer forming step. FIGS. 17A, 17B, 18A, 18B, 19A, and 19B are in common with FIGS. 12A and 12B. In the modes shown in FIGS. 12C and 17C, the functional layer 150 is formed on the supporter 1 side of the decorating sheet 100 in the functional layer forming step. In the modes shown in FIGS. 18C and 19C, the functional layer 150 is formed on the image layer 10 side of the decorating sheet 100. The functional layer 150 may be formed on both the image layer 10 side and the supporter 1 side of the decorating sheet 100 in each figure. In this case, the functional layers 150 formed on the image layer 10 side and the supporter 1 side may be the same or different. The method for forming the functional layer 150 may select and use the methods and the functional layer 150 described in the above-described functional layer forming step.

When a portion of the supporter 1 can be separated, and the functional layer 150 is formed on the supporter 1 side of the decorating sheet 100 as shown in FIGS. 12C and 17C, the functional layer 150 may be formed after the portion of the supporter 1 is separated. When an adhesion layer, etc., is located on the surface of the decorating sheet 100 after a portion of the supporter 1 is separated, this adhesion layer enables to bond the decorating sheet 100 and the functional layer 150 together. On the other hand, when the functional layer 150 is formed on the image layer 10 side of the decorating sheet 100 as shown in FIGS. 18C and 19C, the separation of a portion of the supporter 1 may be performed either before the functional layer forming step or after the functional layer forming step.

### <Integration step according to modification>

FIGS. 12D, 17D, 18D, and 19D each show an integration step. When supposed that the functional layer 150 side of the decorating sheet 100 on which the functional layer is formed be an upper side and the opposite side be a lower side, the integration step may be performed on the lower side of the decorating sheet 100 as shown in FIGS. 12D and 18D, or on the upper side of the decorating sheet 100 as shown in FIGS. 17D and 19D. The integration step may be performed using the adhesive layer 200.

### (Cutting step)

The method for manufacturing a decorated product according to various embodiments of the present disclosure may include a cutting step of cutting a laminate of the decorating sheet 100 and the object to be decorated 300 in a thickness direction after the integration step.

By performing the cutting step after the integration step, it is possible to manufacture a decorated product in which end faces of the decorating sheet 100 and the object to be decorated 300 are aligned.

When the manufacturing step of a decorated product according to various embodiments includes the functional layer forming step, the cutting step may be before the functional layer forming step or after the functional layer forming step. When the cutting step is performed after the functional layer forming step, a decorating sheet 100, in which end faces of the decorating sheet 100, the object to be decorated 300, and the functional layer are aligned, can be manufactured, which therefore is preferable.

Either one or both of the decorating sheet 100 and the object to be decorated 300 may be cut before the integration step.

When the manufacturing step of a decorated product according to various embodiments includes the separation step, and the separation step is performed after the integration step, the cutting step may be before the separation step or after the separation step.

There is no limitation on a cutting method, and a cutting blade, a laser cutter, and the like are exemplified. Other cutting methods may be used. Cutting with the laser cutter can suppress formation of burrs and slag when cutting the decorating sheet 100 and the object to be decorated 300, and therefore is preferable.

So far, the method for manufacturing a decorated product of the present disclosure, the decorating sheet of the present disclosure, and the decorated product of the present disclosure have been described by taking examples of various modes, but these various modes may be appropriately combined. An example method for manufacturing a decorated product of the present disclosure is a manufacturing method that combines the method for manufacturing a decorated product according to the first embodiment of the present disclosure and the method for manufacturing a decorated product according to the second embodiment of the present disclosure.

A method for manufacturing a decorated product according to an embodiment A of the present disclosure includes: a bonding step of bonding an adhesive layer to an image layer side of a decorating sheet, in which an image layer having a thermal transfer image is provided on a supporter; and an integration step of integrating an object to be decorated and the decorating sheet together on an adhesive layer side of the decorating sheet to which the adhesive layer is bonded. The method for manufacturing a decorated product according to the embodiment A of the present disclosure may satisfy one or more of the following items (1) to (3). When satisfying a plurality of items, any combination thereof will be fine.
(1) The adhesive layer is a masking member-attached adhesive layer in which a masking member is provided on one surface of the adhesive layer; the decorating sheet and the masking member-attached adhesive layer are bonded together on the other surface of the masking member-attached adhesive layer in the bonding step; and after the bonding step, the masking member is peeled off from the masking member-attached adhesive layer, thereafter performing the integration step.
(2) An adhesive layer transfer sheet having the adhesive layer is used, and the adhesive layer of the adhesive layer transfer sheet is transferred to the image layer side of the decorating sheet in the bonding step.
(3) Before the bonding step, a durable layer forming step of forming a durable layer on the image layer of the decorating sheet is included.
   A method for manufacturing a decorated product according to an embodiment B of the present disclosure includes: a bonding step of bonding an adhesive layer to an object to be decorated; and an integration step of integrating a decorating sheet, in which an image layer having a thermal transfer image is provided on a supporter, and the object to be decorated together on an adhesive layer side of the object to be decorated to which the adhesive layer is bonded.
   The method for manufacturing a decorated product according to the embodiment B of the present disclosure may satisfy one or more of the following items (4) to (6). When satisfying a plurality of items, any combination thereof will be fine.
(4) The adhesive layer is a masking member-attached adhesive layer in which a masking member is provided on one surface of the adhesive layer; in the bonding step, the object to be decorated and the masking member-attached adhesive layer are bonded together on the other surface of the masking member-attached adhesive layer; and the masking member is peeled off from the masking member-attached adhesive layer after the bonding step, thereafter performing the integration step.
(5) An adhesive layer transfer sheet having the adhesive layer is used, and the adhesive layer of the adhesive layer transfer sheet is transferred to the image layer side of the decorating sheet, in the bonding step.
(6) Before the integration step, a durable layer forming step of forming a durable layer on the image layer of the decorating sheet is included.
   The method for manufacturing a decorated product according to the embodiment A of the present disclosure may satisfy one or more of the above-described items (1) to (3) and the below-described items (7) to (25). When satisfying a plurality of items, any combination thereof will be fine.
   The method for manufacturing a decorated product according to the embodiment B of the present disclosure may satisfy one or more of the above-described items (4) to (6), and the below-described items (7) to (25). When satisfying a plurality of items, any combination thereof will be fine.
(7) Before the integration step, the durable layer forming step of forming the durable layer on the image layer of the decorating sheet is included.
(8) The thermal transfer image is formed by a sublimation-type thermal transfer method.
(9) The thermal transfer image is formed by a melt-type thermal transfer method.
(10) When supposed that a surface on the supporter side of the image layer of the decorating sheet be a first surface, a portion, or the whole of a constituent member located on the first surface side of the image layer can be peeled off from the image layer side; and a separation step of separating the portion or the whole of the constituent member located on the first surface side of the image layer is included before the integration step, or after the integration step.
(11) The supporter of the decorating sheet has a single layer structure, or a laminated structure; a portion or the whole of the supporter can be separated from the image layer side; and a separation step of separating the portion, or the whole of the supporter is included before the integration step, or after the integration step.
(12) A peeling layer is provided between the supporter of the decorating sheet and the image layer; and in the separation step, the supporter is separated from the decorating sheet with a surface of the supporter side of the peeling layer being as a peeling interface.
(13) The supporter has a laminated structure including a separation assist layer; and when supposed that the surface on the image layer side of the separation assist layer be an upper surface, and a surface on the opposite side thereto be a lower surface, a constituent member of the supporter located in the lower surface of the separation assist layer is separated with the lower surface of the separation assist layer as a separation interface, in the separation step.
(14) The supporter has a laminated structure including a separation assist layer; and when supposed that the surface on the image layer side of the separation assist layer be an upper surface, and a surface on the opposite side thereto be a lower surface, the separation assist layer, and a constituent member of the supporter located in the lower surface of the separation assist layer are separated with the upper surface of the separation assist layer as a separation interface, in the separation step.
(15) A decorating sheet in which at least one functional layer is provided in either one, or both of between the supporter and the image layer, and on the image layer, is used.
(16) The at least one functional layer is provided in a portion between the supporter and the image layer.
(17) The supporter of the decorating sheet includes at least one functional layer.
(18) The supporter has a laminated structure, and a portion of, and not the whole of the supporter can be separated; and when the portion of the supporter is separated from the decorating sheet, the supporter that remains on the image layer side includes the at least one functional layer.
(19) After the integration step, a functional layer forming step of forming at least one functional layer on the decorating sheet is included.
(20) The at least one functional layer is any one of a void layer, a concavo-convex layer, a particle containing layer, a colored layer, a vapor deposition layer, and a tactile layer.
(21) The at least one functional layer is the colored layer, and the colored layer contains any of a black pigment, a white pigment, a pearl pigment, and a metallic pigment.
(22) The supporter includes a paper substrate.
(23) As the object to be decorated, one in which the thermal transfer image formed in the image layer can be visually recognized from the object to be decorated side after the integration step is used.
(24) After the integration step, a cutting step of cutting a laminate of the decorating sheet and the object to be decorated in a thickness direction is included.
(25) The cutting step is performed by a laser cutter.
   The method for manufacturing a decorated product according to an embodiment C of the present disclosure includes: a decorating sheet manufacturing step of manufacturing a decorating sheet having an image layer by forming an image in an image forming layer of a decorating sheet precursor provided with the image forming layer on a supporter; an integration step of integrating an object to be decorated and the decorating sheet together after the decorating sheet manufacturing step; and a functional layer forming step of forming a functional layer on the decorating sheet after the integration step.
   The method for manufacturing a decorated product according to the embodiment C of the present disclosure may satisfy either one or both of the following items (26) and (27).
(26) The integration step is a step of integrating with the object to be decorated on the image layer side of the decorating sheet.
(27) The integration step is a step of integrating with the object to be decorated on the supporter side of the decorating sheet.
   A method for manufacturing a decorated product according to an embodiment D of the present disclosure includes: a decorating sheet manufacturing step of manufacturing a decorating sheet having an image layer by forming an image in an image forming layer of a decorating sheet precursor provided with the image forming layer on a supporter; a functional layer forming step of forming a functional layer on the decorating sheet after the decorating sheet manufacturing step; and an integration step of integrating an object to be decorated and the decorating sheet together after the functional layer forming step.
   The method for manufacturing a decorated product according to the embodiment D of the present disclosure may satisfy one or more of the following items (28) to (31). When satisfying a plurality of items, any combination thereof will be fine.
(28) The functional layer forming step is a step of forming the functional layer on the image layer side of the decorating sheet.
(29) The functional layer forming step is a step of forming the functional layer on the supporter side of the decorating sheet.
(30) The integration step is, when supposed that the functional layer side of the decorating sheet formed with the functional layer be an upper side and the opposite side thereto be a lower side, a step of integrating with the object to be decorated on the upper side of the decorating sheet.
(31) The integration step is, when supposed that the functional layer side of the decorating sheet formed with the functional layer be an upper side and the opposite side thereto be a lower side, a step of integrating with the object to be decorated on the lower side of the decorating sheet.
   The method for manufacturing a decorated product according to the embodiment C of the present disclosure may satisfy one or more of the above-described items (26) and (27) and the below-described items (32) to (52). When satisfying a plurality of items, any combination thereof will be fine.
   The method for manufacturing a decorated product according to the embodiment D of the present disclosure may satisfy one or more of the above-described items (28) to (31) and the below-described items (32) to (52). When satisfying a plurality of items, any combination thereof will be fine.
(32) The supporter has a laminated structure, in which a portion of the supporter can be separated, and a separation step of separating the portion of the supporter is included, and the functional layer forming step is a step of forming the functional layer on the decorating sheet precursor after the separation step or on the decorating sheet after the separation step.
(33) The separation step is performed after the decorating sheet manufacturing step.
(34) The supporter has a laminated structure including a separation assist layer, and when supposed that the surface on the image forming layer side of the separation assist layer be an upper surface, and the surface on the opposite side thereto be a lower surface, the separation step is a step of separating the portion of the supporter with the lower surface of the separation assist layer being as a separation interface.
(35) The separation assist layer is a peeling layer.
(36) The supporter has a laminated structure including the separation assist layer, and when supposed that the surface on the image forming layer side of the separation assist layer be an upper surface, and the surface on the opposite side thereto be a lower surface, the separation step is a step of separating the portion of the supporter with the upper surface of the separation assist layer being as a separation interface.
(37) The separation assist layer is a release layer.
(38) In the functional layer forming step, the functional layer and the decorating sheet are bonded together by using an adhesive layer.
(39) In the functional layer forming step, an adhesive layer which is bonded with the functional layer, or an adhesive layer which is bonded with the decorating sheet is used.
(40) The bonding of the adhesive layer is performed by transferring the adhesive layer by using a transfer sheet which can transfer the adhesive layer.
(41) The functional layer forming step is performed by transferring the functional layer by using a transfer sheet which can transfer the functional layer.
(42) The supporter of a recording medium includes an adhesion layer, and the adhesion layer is in contact with the separation assist layer on the upper surface side of the separation assist layer.
(43) Before the integration step, a durable layer forming step of forming a durable layer on the image layer, in which the image is formed, is included.
(44) A step of bonding an adhesive layer to the object to be decorated, or the decorating sheet is included between the decorating sheet manufacturing step and the integration step, and the integration step is performed by using the adhesive layer.
(45) The bonding of the adhesive layer is performed by using an adhesive layer transfer sheet having the adhesive layer.
(46) The functional layer formed in the functional layer forming step includes at least one of a void layer, a concavo-convex layer, a particle-containing layer, a colored layer, a vapor deposition layer, and a tactile layer.
(47) The supporter of the recording medium includes at least one of a void layer, a concavo-convex layer, a particle-containing layer, a colored layer, a vapor deposition layer, and a tactile layer.
(48) The colored layer is a colored layer containing any of a black pigment, a white pigment, a pearl pigment, and a metallic pigment.
(49) As the object to be decorated, one in which the image formed in the image layer can be visually recognized from the object to be decorated side after the integration step is used.
(50) The image formed in the image forming layer is formed by a sublimation-type thermal transfer method.
(51) The image formed in the image forming layer is formed by a melt-type thermal transfer method.
(52) The image formed in the image forming layer is formed by an inkjet printing method or a toner printing method.
   The decorating sheet according to the embodiment A of the present disclosure includes a supporter, an image layer in which a thermal transfer image is formed, and an adhesive layer, which are laminated in this order.
   The decorating sheet according to the embodiment A of the present disclosure may satisfy one or more of the following items (53) to (57). When satisfying a plurality of items, any combination thereof will be fine.
(53) A masking member which can be peeled off from the adhesive layer is provided on the adhesive layer.
(54) A durable layer is provided between the image layer and the adhesive layer.
(55) At least one functional layer is provided in either one, or both of between the supporter and the image layer, and between the image layer and the adhesive layer, and the at least one functional layer is any one of a void layer, a concavo-convex layer, a particle containing layer, a colored layer, a vapor deposition layer, and a tactile layer.
(56) The at least one functional layer is provided in a portion between the supporter and the image layer.
(57) The supporter includes at least one functional layer, and the at least one functional layer is any one of a void layer, a concavo-convex layer, a particle-containing layer, a colored layer, a vapor deposition layer, and a tactile layer.

A decorated product according to the embodiment A of the present disclosure includes a supporter, an image layer in which a thermal transfer image is formed, an adhesive layer, and an object to be decorated, which are laminated in this order.

A decorated product according to the embodiment B of the present disclosure is a decorated product in which a decorating sheet and an object to be decorated are integrated together, and the decorating sheet is the decorating sheet of the embodiment A.

A decorated product according to the embodiment C of the present disclosure is a decorated product manufactured by the method for manufacturing a decorated product according to the embodiment A.

A decorated product according to the embodiment D of the present disclosure is a decorated product manufactured by the method for manufacturing a decorated product according to the embodiment B.

A decorated product according to an embodiment E of the present disclosure is a decorated product manufactured by the method for manufacturing a decorated product according to the embodiment C.

A decorated product according to an embodiment F of the present disclosure is a decorated product manufactured by the method for manufacturing a decorated product according to the embodiment D.

### Reference Signs List

- 100: Decorating sheet
- 1: Supporter
- 5: Peeling layer
- 6: Separation assist layer
- 7, 150: Functional layer
- 10: Image layer
- 10A: Image forming layer
- 50: Thermal transfer image, Image
- 100A: Decorating sheet precursor
- 100B: Decorating sheet with a functional layer
- 151: Functional layer supporter
- 200: Adhesive layer
- 200A: Masking member-attached adhesive layer
- 210: Masking member
- 230: Durable layer
- 250: Transfer sheet, Adhesive layer transfer sheet, Durable layer transfer sheet, Functional layer transfer sheet
- 260, 271: Supporter of various transfer sheet
- 270: Thermal transfer sheet
- 273: Color material layer
- 300: Object to be decorated
- 400: Decorated product

## Claims

1. A method for manufacturing a decorated product, comprising:
bonding an adhesive layer to an image layer side of a decorating sheet, in which an image layer having a thermal transfer image is provided on a supporter; and
integrating an object to be decorated and the decorating sheet together on an adhesive layer side of the decorating sheet to which the adhesive layer is bonded.

2. The method for manufacturing a decorated product according to claim 1, wherein
the adhesive layer is a masking member-attached adhesive layer in which a masking member is provided on one surface of the adhesive layer;
in the bonding, the decorating sheet and the masking member-attached adhesive layer are bonded together on the other surface of the masking member-attached adhesive layer; and
after the bonding, the masking member is peeled off from the masking member-attached adhesive layer, and thereafter performing the integrating.

3. The method for manufacturing a decorated product according to claim 1 or 2, wherein
an adhesive layer transfer sheet having the adhesive layer is used, and
in the bonding, the adhesive layer of the adhesive layer transfer sheet is transferred to the image layer side of the decorating sheet.

4. The method for manufacturing a decorated product according to any one of claims 1 to 3, further comprising:
before the bonding, forming a durable layer on the image layer of the decorating sheet.

5. A method for manufacturing a decorated product, comprising:
bonding an adhesive layer to an object to be decorated; and
integrating a decorating sheet, in which an image layer having a thermal transfer image is provided on a supporter, and the object to be decorated together on an adhesive layer side of the object to be decorated to which the adhesive layer is bonded.

6. The method for manufacturing a decorated product according to claim 5, wherein
the adhesive layer is a masking member-attached adhesive layer in which a masking member is provided on one surface of the adhesive layer;
in the bonding, the object to be decorated and the masking member-attached adhesive layer are bonded together on the other surface of the masking member-attached adhesive layer; and
after the bonding, the masking member is peeled off from the masking member-attached adhesive layer, and thereafter performing the integrating.

7. The method for manufacturing a decorated product according to claim 5 or 6, wherein
an adhesive layer transfer sheet having the adhesive layer is used, and
in the bonding, the adhesive layer of the adhesive layer transfer sheet is transferred to the image layer side of the decorating sheet.

8. The method for manufacturing a decorated product according to any one of claims 5 to 7, further comprising:
before the integrating, forming a durable layer on the image layer of the decorating sheet.

9. The method for manufacturing a decorated product according to any one of claims 1 to 8, wherein
the thermal transfer image is formed by a sublimation-type thermal transfer method.

10. The method for manufacturing a decorated product according to any one of claims 1 to 8, wherein
the thermal transfer image is formed by a melt-type thermal transfer method.

11. The method for manufacturing a decorated product according to any one of claims 1 to 10, wherein
when supposed that a surface on the supporter side of the image layer of the decorating sheet be a first surface, a portion, or the whole of a constituent member located on the first surface side of the image layer can be peeled off from the image layer side; and the method further comprises:
before the integrating, or after the integrating, separating the portion or the whole of the constituent member located on the first surface side of the image layer.

12. The method for manufacturing a decorated product according to any one of claims 1 to 10, wherein
the supporter of the decorating sheet has a single layer structure, or a laminated structure; a portion or the whole of the supporter can be separated from the image layer side; and the method further comprises:
before the integrating, or after the integrating, separating the portion, or the whole of the supporter.

13. The method for manufacturing a decorated product according to claim 11 or 12, wherein
a peeling layer is provided between the supporter of the decorating sheet and the image layer; and
in the separating, the supporter is separated from the decorating sheet with a surface of the supporter side of the peeling layer being as a peeling interface.

14. The method for manufacturing a decorated product according to any one of claims 11 to 13, wherein
the supporter has a laminated structure including a separation assist layer; and
when supposed that a surface on the image layer side of the separation assist layer be an upper surface, and a surface on the opposite side thereto be a lower surface, in the separating, a constituent member of the supporter located in the lower surface of the separation assist layer is separated with the lower surface of the separation assist layer as a separation interface.

15. The method for manufacturing a decorated product according to any one of claims 11 to 13, wherein
the supporter has a laminated structure including a separation assist layer; and
when supposed that a surface on the image layer side of the separation assist layer be an upper surface, and a surface on the opposite side thereto be a lower surface, in the separating, the separation assist layer, and a constituent member of the supporter located in the lower surface of the separation assist layer are separated with the upper surface of the separation assist layer as a separation interface.

16. The method for manufacturing a decorated product according to any one of claims 1 to 15, wherein
a decorating sheet in which at least one functional layer is provided in either one, or both of between the supporter and the image layer, and on the image layer, is used.

17. The method for manufacturing a decorated product according to claim 16, wherein
the at least one functional layer is provided in a portion between the supporter and the image layer.

18. The method for manufacturing a decorated product according to any one of claims 1 to 17, wherein
the supporter of the decorating sheet includes at least one functional layer.

19. The method for manufacturing a decorated product according to claim 18, wherein
the supporter has a laminated structure, and a portion of, and not the whole of the supporter can be separated; and
when the portion of the supporter is separated from the decorating sheet, the supporter that remains on the image layer side includes the at least one functional layer.

20. The method for manufacturing a decorated product according to any one of claims 1 to 19, further comprising after the integrating, forming at least one functional layer on the decorating sheet.

21. The method for manufacturing a decorated product according to any one of claims 16 to 20, wherein
the at least one functional layer is any one of a void layer, a concavo-convex layer, a particle containing layer, a colored layer, a vapor deposition layer, and a tactile layer.

22. The method for manufacturing a decorated product according to any one of claims 16 to 21, wherein
the at least one functional layer is the colored layer, and the colored layer contains any of a black pigment, a white pigment, a pearl pigment, and a metallic pigment.

23. The method for manufacturing a decorated product according to any one of claims 1 to 22, wherein
the supporter includes a paper substrate.

24. The method for manufacturing a decorated product according to any one of claims 1 to 23, wherein
as the object to be decorated, after the integrating, one in which the thermal transfer image formed in the image layer can be visually recognized from the object to be decorated side is used.

25. The method for manufacturing a decorated product according to any one of claims 1 to 24, further comprising:
after the integrating, cutting a laminate of the decorating sheet and the object to be decorated in a thickness direction.

26. The method for manufacturing a decorated product according to claim 25, wherein
the cutting is performed by a laser cutter.

27. A decorating sheet, comprising
a supporter, an image layer formed with a thermal transfer image, and an adhesive layer which are laminated in this order.

28. The decorating sheet according to claim 27, wherein
a masking member which can be peeled off from the adhesive layer is provided on the adhesive layer.

29. The decorating sheet according to claim 27 or 28, wherein
a durable layer is provided between the image layer and the adhesive layer.

30. The decorating sheet according to any one of claims 27 to 29, wherein
at least one functional layer is provided in either one, or both of between the supporter and the image layer, and between the image layer and the adhesive layer, and
the at least one functional layer is any one of a void layer, a concavo-convex layer, a particle containing layer, a colored layer, a vapor deposition layer, and a tactile layer.

31. The decorating sheet according to claim 30, wherein
the at least one functional layer is provided in a portion between the supporter and the image layer.

32. The decorating sheet according to any one of claims 27 to 31, wherein
the supporter includes at least one functional layer, and the at least one functional layer is any one of a void layer, a concavo-convex layer, a particle-containing layer, a colored layer, a vapor deposition layer, and a tactile layer.

33. A decorated product, comprising
a supporter, an image layer formed with a thermal transfer image, an adhesive layer, and an object to be decorated which are laminated in this order.

34. A decorated product comprising a decorating sheet and an object to be decorated which are integrated together, wherein
the decorating sheet is a decorating sheet according to any one of claims 27 to 32.

35. A method for manufacturing a decorated product, comprising:
manufacturing a decorating sheet having an image layer by forming an image in an image forming layer of a decorating sheet precursor provided with the image forming layer on a supporter;
after manufacturing the decorating sheet, integrating an object to be decorated and the decorating sheet together; and
after the integrating, forming a functional layer on the decorating sheet.

36. A method for manufacturing a decorated product, comprising:
manufacturing a decorating sheet having an image layer by forming an image in an image forming layer of a decorating sheet precursor provided with the image forming layer on a supporter;
after manufacturing the decorating sheet, forming a functional layer on the decorating sheet; and
after forming the functional layer, integrating an object to be decorated and the decorating sheet together.
